(19) Europäisches Patentamt
European Patent Office
Office européen des brevets

(11) Veröffentlichungsnummer: **0 346 729 B1**

# (12) EUROPÄISCHE PATENTSCHRIFT

(45) Veröffentlichungstag der Patentschrift: **20.10.93**

(51) Int. Cl.$^5$: **B41M 5/26**

(21) Anmeldenummer: **89110191.7**

(22) Anmeldetag: **06.06.89**

## (54) Verfahren zur Übertragung von Azofarbstoffen mit einer Pyridin-Kupplungskomponente.

(30) Priorität: **15.06.88 DE 3820313**

(43) Veröffentlichungstag der Anmeldung:
**20.12.89 Patentblatt 89/51**

(45) Bekanntmachung des Hinweises auf die Patenterteilung:
**20.10.93 Patentblatt 93/42**

(84) Benannte Vertragsstaaten:
**CH DE FR GB IT LI**

(56) Entgegenhaltungen:
**EP-A- 0 340 722**
**DE-A- 3 330 155**
**FR-A- 2 259 882**
**GB-A- 2 159 971**

(73) Patentinhaber: **BASF Aktiengesellschaft**
**Carl-Bosch-Strasse 38**
**D-67063 Ludwigshafen(DE)**

(72) Erfinder: **Etzbach, Karl-Heinz**
**Carl-Bosch-Ring 55**
**D-6710 Frankenthal(DE)**
Erfinder: **Lamm, Gunther**
**Heinrich-Heine-Strasse 7**
**D-6733 Hassloch(DE)**
Erfinder: **Loeffler, Hermann**
**Haydnstrasse 23**
**D-6720 Speyer(DE)**
Erfinder: **Reichelt, Helmut**
**Johann-Gottlieb-Fiechte-Strasse 56**
**D-6730 Neustadt(DE)**
Erfinder: **Sens, Rüdiger**
**Medicusstrasse 12**
**D-6800 Mannheim 1(DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.6/3.3.1)

## Beschreibung

Die vorliegende Erfindung betrifft ein neues Verfahren zur Übertragung von Azofarbstoffen, die eine Kupplungskomponente auf Diaminopyridinbasis aufweisen, von einem Träger auf ein mit Kunststoff beschichtetes Papier mit Hilfe eines Thermokopfes.

Beim Thermotransferdruckverfahren wird ein Transferblatt, welches einen thermisch transferierbaren Farbstoff in einem oder mehreren Bindemitteln, gegebenenfalls zusammen mit geeigneten Hilfsmitteln, auf einem Träger enthält, mit einem Heizkopf mit kurzen Heizimpulsen (Dauer: Bruchteile einer Sekunde) von der Rückseite her erhitzt, wodurch der Farbstoff aus dem Transferblatt migriert und in die Oberflächenbeschichtung eines Aufnahmemediums hineindiffundiert. Der wesentliche Vorteil dieses Verfahrens besteht darin, daß die Steuerung der zur übertragenden Farbstoffmenge (und damit die Farbabstufung) durch Einstellung der an den Heizkopf abzugebenden Energie leicht möglich ist.

Allgemein wird die Farbaufzeichnung unter Verwendung der drei subtraktiven Grundfarben Gelb, Magenta und Cyan (und gegebenenfalls Schwarz) durchgeführt. Um eine optimale Farbaufzeichnung zu ermöglichen, müssen die Farbstoffe folgende Eigenschaften besitzen:

i) leichte thermische Transferierbarkeit,

ii) geringe Migration innerhalb oder aus der Oberflächenbeschichtung des Aufnahmemediums bei Raumtemperatur,

iii) hohe thermische und photochemische Stabilität sowie Resistenz gegen Feuchtigkeit und chemische Stoffe,

iv) für substraktive Farbmischung die geeigneten Farbtöne aufweisen,

v) einen hohen molaren Absorptionskoeffizienten aufweisen,

vi) bei Lagerung des Transferblattes nicht auskristallisieren,

vii) technisch leicht zugänglich sein.

Diese Forderungen sind gleichzeitig sehr schwierig zu erfüllen, wie die Erfahrung lehrt.

Daher entsprechen die meisten der bekannten, für den thermischen Transferdruck verwendeten Farbstoffe nicht dem geforderten Anforderungsprofil.

Aus dem Stand der Technik sind bereits Farbstoffe bekannt, die in Thermotransferdruckverfahren zur Anwendung kommen. So sind beispielsweise in der EP-A-216 483 und EP-A-258 856 Azofarbstoffe beschrieben, die Diazokomponenten auf Thiophenbasis und Kupplungskomponenten auf Anilinbasis aufweisen.

Weiterhin sind aus der EP-A-218 397 für diesen Zweck Disazofarbstoffe auf Thiophen- und Anilinbasis bekannt.

Die JP-A-30 392/1985 lehrt die Verwendung von Azofarbstoffen, die eine Diazokomponente auf 5-Aminothia-2,4-diazolbasis und eine Kupplungskomponente auf Anilinbasis aufweisen.

Schließlich ist aus der JP-A-227 092/1986 die Verwendung von Azofarbstoffen bekannt, deren Diazo- und Kupplungskomponenten der Anilinreihe entstammen.

Aufgabe der vorliegenden Erfindung war es nun, ein Verfahren zur Übertragung von Farbstoffen bereitzustellen, wobei die Farbstoffe die obengenannten Forderungen i) bis vii) möglichst gut erfüllen sollten.

Es wurde gefunden, daß die Übertragung von Azofarbstoffen von einem Träger auf ein mit Kunststoff beschichtetes Papier durch Diffusion, mit Hilfe eines Thermokopfes vorteilhaft gelingt, wenn man einen Träger verwendet, auf dem sich ein oder mehrere Azofarbstoffe der Formel I

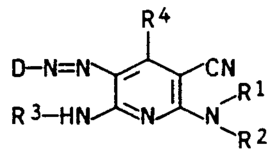

(I)

befinden, in der

$R^1$, $R^2$ und $R^3$ gleich oder verschieden sind und unabhängig voneinander jeweils Alkyl, Alkoxyalkyl, Alkanoyloxyalkyl, Alkoxycarbonyloxyalkyl oder Alkoxycarbonylalkyl, wobei diese Reste jeweils bis zu 20 Kohlenstoffatome aufweisen und durch Phenyl, $C_1$-$C_4$-Alkylphenyl, $C_1$-$C_4$-Alkoxyphenyl, Halogenphenyl, Benzyloxy, $C_1$-$C_4$-Alkylbenzyloxy, $C_1$-$C_4$-Alkoxybenzyloxy, Halogenbenzyloxy, Halogen, Hydroxy oder Cyano substituiert sein können, Wasserstoff, gegebenenfalls durch $C_1$-$C_{15}$-Alkyl, $C_1$-$C_{15}$-Alkoxy, Halogen oder Benzyloxy

substituiertes Phenyl, gegebenenfalls durch $C_1$-$C_{15}$-Alkyl, $C_1$-$C_{15}$-Alkoxy, Halogen oder Benzyloxy substituiertes Cyclohexyl oder einen Rest der Formel II

$$[-Y-O]_m-R^5 \quad (II),$$

worin

Y für $C_2$-$C_6$-Alkylen

m für 1, 2, 3, 4, 5 oder 6 und

$R^5$ für $C_1$-$C_4$-Alkyl oder gegebenenfalls durch $C_1$-$C_4$-Alkyl oder $C_1$-$C_4$-Alkoxy substituiertes Phenyl stehen, und

$R^4$ $C_1$-$C_4$-Alkyl bedeuten und

D den Rest einer Diazokomponente, der sich von einer Diazokomponente D-$NH_2$ der Formel

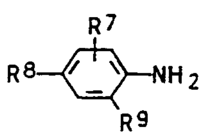
(IVa)
,
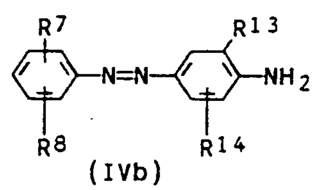
(IVb)
,
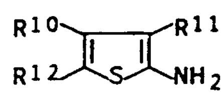
(IVc)

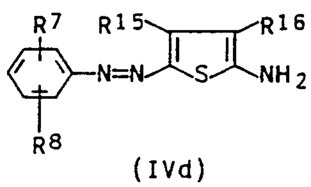
(IVd)
,
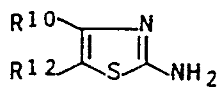
(IVe)
,
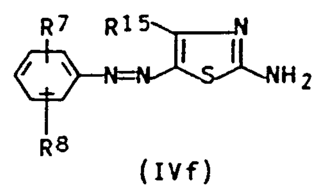
(IVf)
,

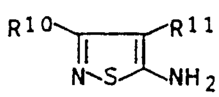
(IVg)

oder

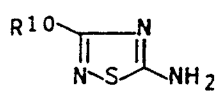
(IVh)

ableitet, wobei

$R^7$, $R^8$ und $R^9$ gleich oder verschieden sind und unabhängig voneinander jeweils Alkyl, Alkoxyalkyl, Alkoxycarbonylalkyl oder Alkanoyloxyalkyl, wobei diese Reste jeweils bis zu 12 Kohlenstoffatome aufweisen können, Wasserstoff, Cyano, Halogen, Nitro, einen Rest der Formel II

$[-Y-O]_m-R^5$ (II),

in der Y, $R^5$ und m jeweils die obengenannte Bedeutung besitzen, oder einen Rest der Formel -CO-$OR^{17}$, -CO-$NR^{17}R^{18}$, -$SO_2$-$R^{17}$, -$SO_2$-$OR^{17}$ oder $SO_2$-$NR^{17}R^{18}$, worin $R^{17}$ und $R^{18}$ gleich oder verschieden sind und unabhängig voneinander jeweils für Alkyl, Alkoxyalkyl, Alkoxycarbonylalkyl oder Alkanoylosyalkyl, wobei diese Reste jeweils bis zu 12 Kohlenstoffatome aufweisen können, Wasserstoff oder für einen Rest der Formel II

$[-Y-O]_m-R^5$ (II),

in der Y, $R^5$ und m jeweils die obengenannte Bedeutung besitzen, stehen,

$R^{10}$ Wasserstoff, Chlor, Cyano, $C_1$-$C_8$-Alkyl, $C_1$-$C_8$-Alkoxy, $C_1$-$C_8$-Alkylthio, Alkoxyalkyl, das bis 8 Kohlenstoffatome aufweisen kann, Phenyl, das gegebenenfalls durch $C_1$-$C_4$-

Alkyl, $C_1$-$C_4$-Alkoxy oder Benzyloxy substituiert ist, Benzyl, Benzyloxy oder einen Rest der Formel -CO-$OR^{17}$ oder -CO-$NR^{17}R^{18}$, worin $R^{17}$ und $R^{18}$ jeweils die obengenannte Bedeutung besitzen,

$R^{11}$ Wasserstoff, Cyano, Nitro oder einen Rest der Formel -CO-$OR^{17}$ oder -CO-$NR^{17}R^{18}$, worin $R^{17}$ und $R^{18}$ jeweils die obengenannte Bedeutung besitzen,

$R^{12}$ Cyano, Nitro, Formyl oder einen Rest der Formel
-CO-$OR^{17}$ , -CO-$NR^{17}R^{18}$ ,

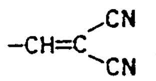 , 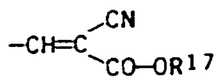

oder

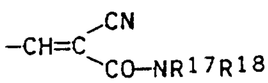 ,

worin $R^{17}$ und $R^{18}$ jeweils die obengenannte Bedeutung besitzen,

$R^{13}$ und $R^{14}$ gleich oder verschieden sind und unabhängig voneinander jeweils Wasserstoff, $C_1$-$C_4$-Alkyl, $C_1$-$C_4$-Alkoxy, Chlor, Cyano, Nitro oder einen Rest der Formel -CO-$OR^{17}$ oder -CO-$NR^{17}R^{18}$, worin $R^{17}$ und $R^{18}$ jeweils die obengenannte Bedeutung besitzen,

$R^{15}$ Wasserstoff, $C_1$-$C_4$-Alkyl oder Chlor und

$R^{16}$ Cyano oder einen Rest der Formel -CO-$OR^{17}$ oder - CO-$NR^{17}R^{18}$, worin $R^{17}$ und $R^{18}$ jeweils die obengenannte Bedeutung besitzen, bedeuten, wobei die folgenden Verbindungen ausgenommen sind:

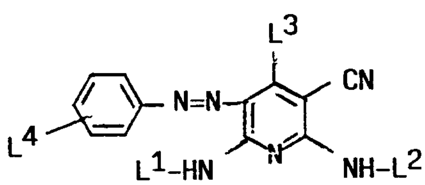

| $L^1$ | $L^2$ | $L^3$ | $L^4$ |
|---|---|---|---|
| $CH_3OC_2H_4$ | $CH_3OC_2H_4$ | $CH_3$ | 4-Cl |
| $CH_3OC_2H_4$ | $CH_3OC_2H_4$ | $CH_3$ | 4-$CO_2C_2H_5$ |
| $CH_3OC_2H_4$ | $CH_3OC_2H_4$ | $CH_3$ | 3-$CO_2C_2H_5$ |
| n-$C_4H_9$ | n-$C_4H_9$ | $CH_3$ | 2-$CO_2C_2H_5$ |
| $CH_3OC_2H_4$ | $CH_3OC_2H_4$ | $CH_3$ | 2-$CO_2C_2H_5$ |
| $CH_3OC_2H_4$ | $CH_3OC_2H_4$ | $CH_3$ | 2-$CON(C_2H_5)_2$ |
| $CH_3OC_2H_4$ | $CH_3OC_2H_4$ | $CH_3$ | 2-$CO_2C_2H_4CH(CH_3)_2$ |
| n-$C_4H_9$ | n-$C_4H_9$ | $CH_3$ | 2-CN |

Die oben ausgeschlossenen Verbindungen sind aus der EP-A-340 722 bekannt. Dieses Dokument gilt für alle benannten Vertragsstaaten als Stand der Technik gemäß Art. 54 (3) EPÜ.

Weiterhin beschreibt die GB-A-2 159 971 die thermische Übertragung von strukturähnlichen Reaktivfarbstoffen.

Alle in den obengenannten Formeln auftretenden Alkylreste können sowohl geradkettig als auch verzweigt sein.

Reste Y sind z.B. Ethylen, 1,2- oder 1,3-Propylen, 1,2-, 1,3-, 1,4- oder 2,3-Butylen, Pentamethylen, Hexamethylen oder 2-Methylpentamethylen.

Geeignete Reste $R^1$, $R^2$, $R^3$, $R^4$, $R^5$, $R^7$, $R^8$, $R^9$, $R^{10}$, $R^{13}$, $R^{14}$, $R^{15}$, $R^{17}$ und $R^{18}$ sind z.B. Methyl, Ethyl, Propyl, Isopropyl, Butyl, Isobutyl, sec-Butyl oder tert-Butyl.

Reste $R^1$, $R^2$, $R^3$, $R^7$, $R^8$, $R^9$, $R^{10}$, $R^{17}$ und $R^{18}$ sind weiterhin z.B. Pentyl, Isopentyl, Neopentyl, tert-Pentyl, Hexyl, 2-Methylpentyl, Heptyl, Octyl, 2-Ethylhexyl oder Isooctyl.

Reste $R^1$, $R^2$, $R^3$, $R^7$, $R^8$, $R^9$, $R^{17}$ und $R^{18}$ sind weiterhin z.B. Nonyl, Isononyl, Decyl, Isodecyl, Undecyl oder Dodecyl.

Reste $R^1$, $R^2$ und $R^3$ sind weiterhin z.B. Tridecyl, Isotridecyl, Tetradecyl, Pentadecyl, Hexadecyl, Heptadecyl, Octadecyl, Nonadecyl oder Eicosyl. (Die Bezeichnungen Isooctyl, Isononyl, Isodecyl und Isotridecyl sind Trivialbezeichnungen und stammen von den nach der Oxosynthese erhaltenen Alkoholen (vgl. dazu Ullmanns Enzyklopädie der technischen Chemie, 4. Auflage, Band 7, Seiten 215 bis 217 sowie Band 11, Seiten 435 und 436).)

Reste $R^1$, $R^2$, $R^3$, $R^7$, $R^8$, $R^9$, $R^{17}$ und $R^{18}$ sind weiterhin z.B. 2-Methoxyethyl, 2-Ethoxyethyl, 2-Propoxyethyl, 2-Butoxyethyl, 2- oder 3-Methoxypropyl, 2- oder 3-Ethoxypropyl, 2- oder 3-Propoxypropyl, 2- oder 3-Butoxypropyl, 4-Methoxybutyl, 4-Ethoxybutyl, 4-Butoxybutyl, 4-(2-Ethylhexyloxy)butyl, 8-Methoxyoctyl oder 8-Butoxyoctyl.

Reste $R^{10}$, $R^{13}$ und $R^{14}$ sind weiterhin beispielsweise Methoxy, Ethoxy, Propoxy, Isopropoxy, Butoxy, Isobutoxy oder sec-Butoxy.

Reste $R^{10}$ sind weiterhin z.B. Pentyloxy, Isopentyloxy, Neopentyloxy, Hexyloxy, Heptyloxy, Octyloxy, 2-Ethylhexyloxy, Methylthio, Ethylthio, Propylthio, Isopropylthio, Butylthio, Pentylthio, Hexylthio, Heptylthio, Octylthio oder 2-Ethylhexylthio.

Reste $R^1$, $R^2$ und $R^3$ sind weiterhin z.B. Benzyl, 1- oder 2-Phenylethyl,

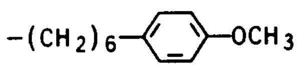 , 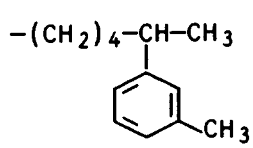 ,

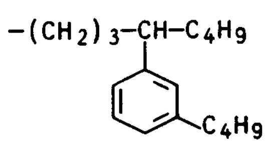 , 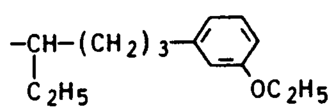 , 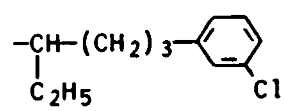 ,

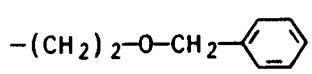 , 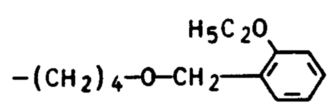 , 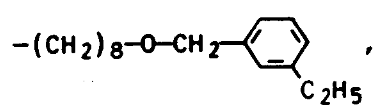 ,

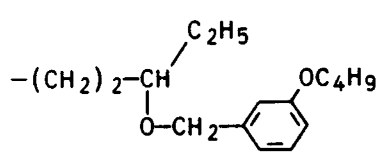 , 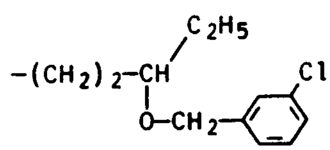 ,

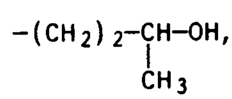 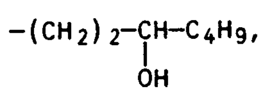 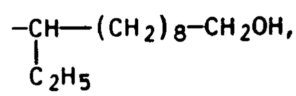

$-C_2H_4-CN$, $-(CH_2)_2-CH_2-CN$,

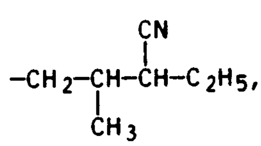

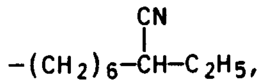 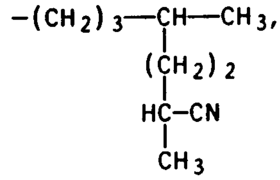

$-(CH_2)_4-CH_2-Cl$,

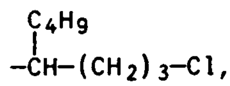

-(CH)$_4$-CF$_3$,

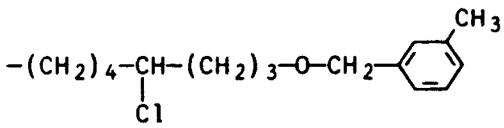 , 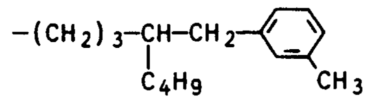 ,

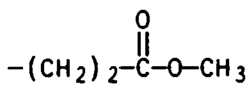 , 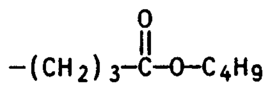

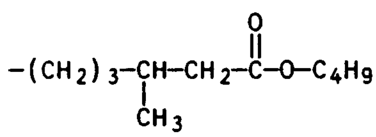 , 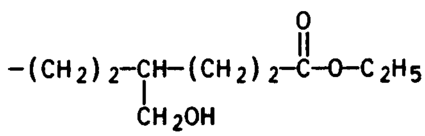 ,

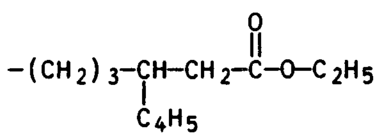 ,

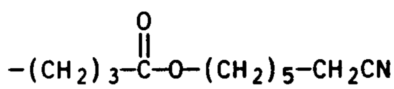 , 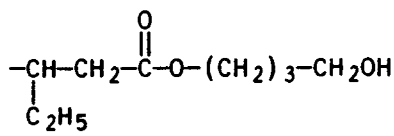 ,

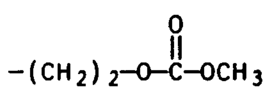 , 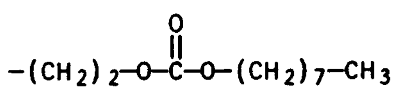 ,

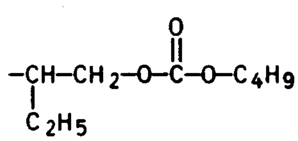 , 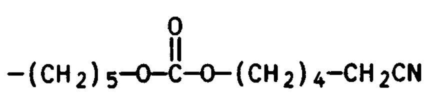 ,

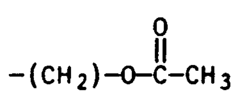 , 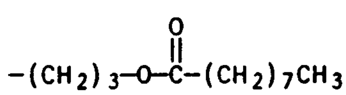 ,

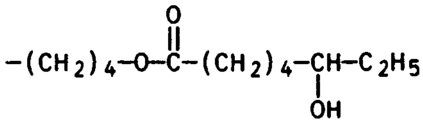 ,

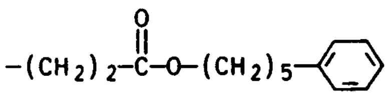 , 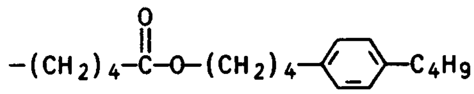 ,

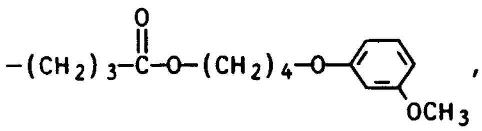 ,

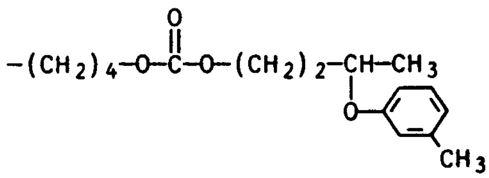 ,

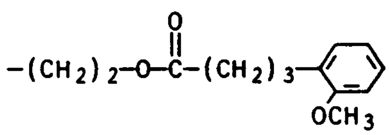 , 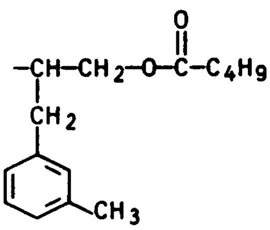 ,

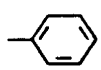 , 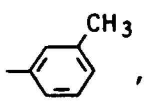 , 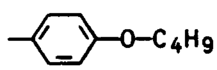 , 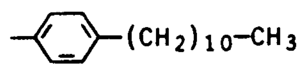 , 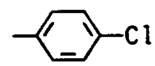

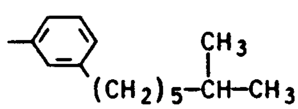 , 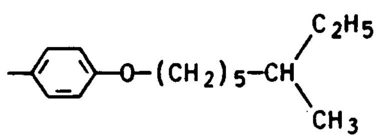 , 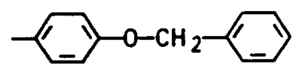 ,

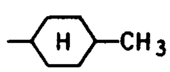 , 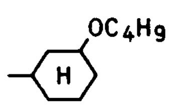 , 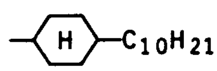 ,

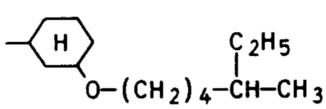 , 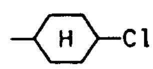 ,

$-(CH_2)_2-O-CH_3$ , $-(CH_2)_2-O-C_2H_5$ ,

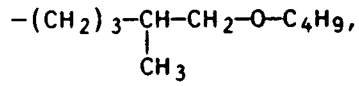

$-(CH_2)_6-O-C_4H_9$ ,

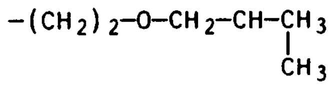 ,

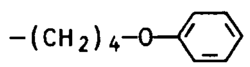 , 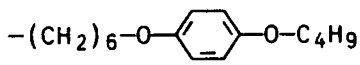 ,

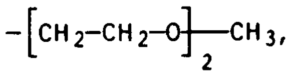 , 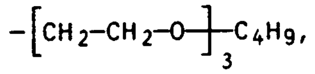 , 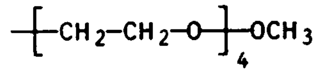 ,

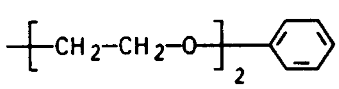 , 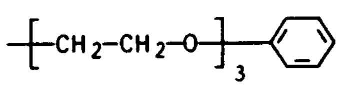 , 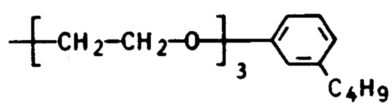 ,

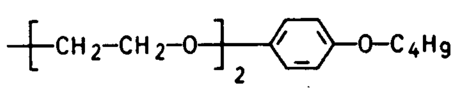 , 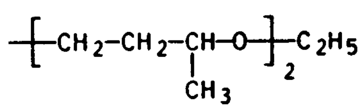 oder

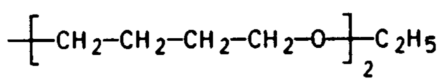 .

Für die Reste $R^7$, $R^8$, $R^9$, $R^{17}$ und $R^{18}$ gelten jeweils die entsprechenden obengenannten beispielhaften Aufzählungen.

Das erfindungsgemäße Verfahren ist bevorzugt, wenn man einen Träger verwendet, auf dem sich ein oder mehrere Azofarbstoffe der Formel I befinden, in der

$R^1$, $R^2$ und $R^3$ unabhängig voneinander Wasserstoff, Alkyl oder Alkoxyalkyl, wobei diese Reste jeweils bis zu 15 Kohlenstoffatome aufweisen und durch Phenyl, $C_1$-$C_4$-Alkylphenyl, $C_1$-$C_4$-Alkoxyphenyl oder Cyano substituiert sein können, oder einen Rest der Formel III

$$[-(CH_2)_3-O]_p\,[-CH_2-CH_2-O]_n-R^6 \qquad (III),$$

worin

n für 1, 2, 3 oder 4,

p für 0 oder 1 und

$R^6$ für $C_1$-$C_4$-Alkyl oder Phenyl stehen, und

$R^4$ Methyl bedeuten.

Besonders bevorzugt ist das neue Verfahren, wenn man einen Träger verwendet, auf dem sich ein oder mehrere Azofarbstoffe der Formel I befinden, in der der Rest D sich von einer Diazokomponente ableitet, die der Formel IVa, IVb, IVd oder IVf gehorcht, wobei $R^7$, $R^8$ und $R^9$ unabhängig voneinander jeweils Alkyl, Alkoxyalkyl, Alkoxycarbonylalkyl oder Alkanoyloxyalkyl, wobei diese Reste jeweils bis zu 10 Kohlenstoffatome aufweisen können, Wasserstoff, Cyano, Halogen, Nitro oder einen Rest der Formel -CO-OR[19], -CO-

$NR^{19}R^{20}$, $-SO_2-R^{19}$, $-SO_2-OR^{10}$ oder $SO_2-NR^{19}R^{20}$, worin $R^{19}$ und $R^{20}$ unabhängig voneinander jeweils für Alkyl, Alkoxyalkyl, Alkoxycarbonylalkyl oder Alkanoyloxyalkyl, wobei die Reste jeweils bis zu 10 Kohlenstoffatome aufweisen können, Wasserstoff oder für einen Rest der Formel

$[-CH_2-CH_2-O]_n-R^5$ (II),

in der $R^5$ und n jeweils die oben genannte Bedeutung besitzen, stehen, bedeuten.

Weiterhin besonders bevorzugt ist das neue Verfahren, wenn man einen Träger verwendet, auf dem sich ein oder mehere Azofarbstoffe der Formel I befinden, in der der Rest D sich von einer Diazokomponente ableitet, die der Formel IVc gehorcht, wobei

- $R^{10}$ Wasserstoff, Chlor, $C_1$-$C_8$-Alkyl, gegebenenfalls durch $C_1$-$C_4$-Alkyl oder $C_1$-$C_4$-Alkoxy substituiertes Phenyl oder Benzyl,
- $R^{11}$ Cyano oder einen Rest der Formel $-CO-OR^{19}$ oder $-CO-NR^{19}R^{20}$, worin $R^{19}$ und $R^{20}$ jeweils die obengenannte Bedeutung besitzen, und
- $R^{12}$ einen Rest der Formel

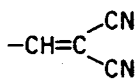 , 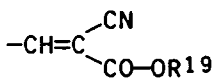

oder

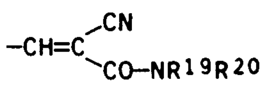 ,

worin $R^{19}$ und $R^{20}$ jeweils die oben genannte Bedeutung besitzen, bedeuten.

Weiterhin bevorzugt ist das neue Verfahren, wenn man einen Träger verwendet, auf dem sich ein oder mehrere Azofarbstoffe der Formel I befinden, in der der Rest D sich von einer Diazokomponente ableitet, die der Formel IVe gehorcht, wobei

- $R^{10}$ Wasserstoff, Chlor, $C_1$-$C_8$-Alkyl, gegebenenfalls durch $C_1$-$C_4$-Alkyl oder $C_1$-$C_4$-Alkoxy substituiertes Phenyl oder Benzyl und
- $R^{12}$ Cyano, Nitro, Formyl oder einen Rest der Formel $-CO-OR^{19}$, wobei $R^{19}$ die obengenannte Bedeutung besitzt, bedeuten.

Weiterhin bevorzugt ist das neue Verfahren, wenn man einen Träger verwendet, auf dem sich ein oder mehrere Azofarbstoffe der Formel I befinden, in der der Rest D sich von einer Diazokomponente ableitet, die der Formel IVg gehorcht, wobei

- $R^{10}$ $C_1$-$C_8$-Alkyl, $C_1$-$C_8$-Alkoxy, Alkoxyalkyl, das bis zu 8 Kohlenstoffatome aufweisen kann, gegebenenfalls durch $C_1$-$C_4$-Alkyl oder $C_1$-$C_4$-Alkoxy substituiertes Phenyl, Benzyl, oder Benzyloxy und
- $R^{11}$ Cyano, Nitro oder den Rest der Formel $-CO-OR^{19}$, wobei $R^{19}$ die obengenannte Bedeutung besitzt, bedeuten.

Weiterhin bevorzugt ist das neue Verfahren, wenn man einen Träger verwendet, auf dem sich ein oder mehrere Azofarbstoffe der Formel I befinden, in der der Rest D sich von einer Diazokomponente ableitet, die der Formel IVc gehorcht, wobei

- $R^{10}$ Wasserstoff, Chlor, $C_1$-$C_8$-Alkyl, $C_1$-$C_8$-Alkoxy, Alkoxyalkyl, das bis zu 8 Kohlenstoffatome aufweisen kann, gegebenenfalls durch $C_1$-$C_4$-Alkyl oder $C_1$-$C_4$-Alkoxy substituiertes Phenyl, Benzyl oder den Rest der Formel $-CO-OR^{19}$, wobei $R^{19}$ die obengenannte Bedeutung besitzt,
- $R^{11}$ Cyano oder den Rest der Formel $-CO-OR^{19}$, wobei $R^{19}$ die obengenannte Bedeutung besitzt, und
- $R^{12}$ Cyano, Nitro, Formyl oder den Rest der Formel $-CO-OR^{19}$, wobei $R^{19}$ die obengenannte Bedeutung besitzt, bedeuten.

Besonders gute Ergebnisse erzielt man, wenn man einen Träger verwendet, auf dem sich ein oder mehrere Azofarbstoffe der Formel I befinden, in der der Rest D sich von einer Diazokomponente ableitet, die der Formel IVa, IVb, IVc, IVd, IVe, IVf oder IVg gehorcht, worin $R^{19}$ und (falls vorhanden) $R^{20}$ Wasserstoff oder $C_1$-$C_6$-Alkyl bedeuten.

Man erzielt weiterhin besonders günstige Ergebnisse, wenn man einen Träger verwendet, auf dem sich ein oder mehrere Azofarbstoffe der Formel I bedinden, in der der Rest D sich von einer Diazokomponente

ableitet die der Formel V

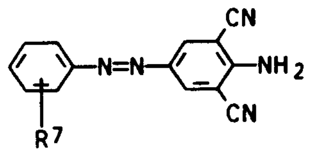

(V)

gehorcht, worin $R^7$ die obengenannte Bedeutung besitzt.

Die Farbstoffe der Formel I sind in sich bekannt oder können nach an sich bekannten Methoden erhalten werden.

Im Vergleich zu den bei den bekannten Verfahren verwendeten Farbstoffen zeichnen sich die beim erfindungsgemäßen Verfahren übertragenen Farbstoffe im allgemeinen durch verbesserte Migrationseigenschaften im Aufnahmemedium bei Raumtemperatur, leichtere thermische Transferierbarkeit, leichtere technische Zugänglichkeit, bessere Resistenz gegen Feuchtigkeit und chemische Stoffe, höhere Farbstärke, bessere Löslichkeit, höhere Farbtonreinheit und insbesondere durch wesentlich höhere Lichtechtheit aus.

Weiterhin ist überraschend, daß die Farbstoffe der Formel I gut transferierbar sind, obwohl sie ein relativ hohes Molekulargewicht besitzen.

Zur Herstellung der für das Verfahren benötigten Farbstoffträger werden die Farbstoffe in einem geeigneten organischen Lösungsmittel, z. B. Chlorbenzol, Isobutanol, Methylethylketon, Methylenchlorid, Toluol, Tetrahydrofuran oder deren Mischungen, mit einem oder mehreren Bindemitteln, gegebenenfalls unter Zugabe von Hilfsmitteln, zu einer Druckfarbe verarbeitet. Diese enthält den Farbstoff vorzugsweise in molekular-dispers gelöster Form. Die Druckfarbe wird mittels einer Rakel auf den inerten Träger aufgetragen, und die Färbung an der Luft getrocknet. Als Bindemittel kommen alle Resins oder Polymermaterialien in Betracht, welche in organischen Lösungsmitteln löslich sind und den Farbstoff an den inerten Träger abreibfest zu binden vermögen. Dabei werden solche Bindemittel bevorzugt, welche den Farbstoff nach Trocknung der Druckfarbe an der Luft in Form eines klaren, transparenten Films aufnehmen, ohne daß dabei eine sichtbare Auskristallisation des Farbstoffes auftritt.

Beispiele für solche Bindemittel sind Cellulosederivate, z. B. Methylcellulose, Ethylcellulose, Ethylhydroxyethylcellulose, Hydroxypropylcellulose, Celluloseacetat oder Celluloseacetobutyrat, Stärke, Alginate, Alkylresins, Vinylresins, Polyvinylalkohol, Polyvinylacetat, Polyvinylbutyrat oder Polyvinylpyrrolidone. Weiterhin kommen Polymere und Copolymere von Acrylaten oder deren Derivate, wie Polyacrylsäure, Polymethylmethacrylat oder Styrolacrylatcopolymere, Polyesterresins, Polyamidresins, Polyurethanresins oder natürliche CH-Resins, wie Gummi Arabicum, als Bindemittel in Betracht. Weitere geeignete Bindemittel sind in der DE-A-3 524 519 beschrieben.

Bevorzugte Bindemittel sind Ethylcellulose oder Ethylhydroxyethylcellulose.

Das Verhältnis Bindemittel zu Farbstoff variiert vorzugsweise zwischen 5:1 und 1:1.

Als Hilfsmittel kommen z.B. Trennmittel in Betracht, wie sie in der EP-A-227 092, EP-A-192 435 oder den dort zitierten Patentanmeldungen spezifiziert sind, darüber hinaus besonders organische Additive, welche das Auskristallisieren der Transferfarbstoffe bei Lagerung und beim Erhitzen des Farbbandes verhindern, z.B. Cholesterin oder Vanillin.

Inerte Träger sind z.B. Seiden-, Lösch- oder Pergaminpapier oder Kunststoffolien mit guter Wärmebeständigkeit, z.B. gegebenenfalls metallbeschichteter Polyester, Polyamid oder Polyimid. Der inerte Träger wird auf der dem Thermokopf zugewandten Seite gegebenenfalls zusätzlich mit einer Gleitmittelschicht (Slipping layer) beschichtet, um ein Verkleben des Thermokopfes mit dem Trägermaterial zu verhindern. Geeignete Gleitmittel werden z.B. in der EP-A-216 483 oder EP-A-227 095 beschrieben. Die Dicke des Farbstoff-Trägers beträgt im allgemeinen 3 bis 30 $\mu$m, vorzugsweise 5 bis 10 $\mu$m.

Als Farbstoffnehmerschicht kommen prinzipiell alle temperaturstabilen Kunststoffschichten mit Affinität zu den zu transferierenden Farbstoffen in Betracht, deren Glasumwandlungstemperatur Tg vorzugsweise im Temperaturbereich $50°C < Tg < 100°C$ liegen sollte, z.B. modifizierte Polycarbonate oder Polyester. Geeignete Rezepturen für die Nehmerschichtzusammensetzung werden z.B. in der EP-A-227 094, EP-A-133 012, EP-A-133 011, EP-A-111 004, JP-A-199 997/1986, JP-A-283 595/1986, JP-A-237 694/1986 oder JP-A-127 392/1986 ausführlich beschrieben.

Die Übertragung erfolgt mittels eines Thermokopfes, der auf eine Temperatur von $\geq 300$ °C aufheizbar sein muß, damit der Farbstofftransfer im Zeitbereich t: $0 < t < 15$ msec erfolgen kann. Dabei migriert der Farbstoff aus dem Transferblatt und diffundiert in die Oberflächenbeschichtung des Aufnahmemediums.

Einzelheiten der Herstellung können den Beispielen entnommen werden, in denen sich Angaben über Prozente, sofern nicht anders vermerkt, auf das Gewicht beziehen.

Transfer der Farbstoffe

Um das Transferverhalten der Farbstoffe quantitativ und in einfacher Weise prüfen zu können, wurde der Thermotransfer mit großflächigen Heizbacken statt eines Thermokopfes durchgeführt, wobei die Transfertemperatur im Bereich 70 °C < T < 120 °C variiert und die Transferzeit auf 2 Minuten festgelegt wurde.

A) Allgemeines Rezept für die Beschichtung der Träger mit Farbstoff:

X g Bindemittel wurden in 8 ml Toluol/Ethanol (8:2 v/v) bei 40 bis 50 °C gelöst. Dazu wurde eine Lösung aus 0,25 g Farbstoff (und gegebenenfalls Cholesterin als Hilfsmittel) in 5 ml Tetrahydrofuran eingerührt. Die so erhaltene Druckpaste wurde mit einer 80 µm Rakel auf eine Polyesterfolie (Dicke: 6 bis 10 µm) abgezogen und mit einem Fön getrocknet. (Das Gewichtsverhältnis Farbstoff:Bindemittel:Hilfsmittel, aus dem sich die absolute Bindemittel- und Hilfsmittelmenge ableiten läßt, ist jeweils in den Tabellen angegeben.)

B) Prüfung auf thermische Transferierbarkeit

Die verwendeten Farbstoffe wurden in der folgenden Weise geprüft:

Die den zu prüfenden Farbstoff in der Beschichtungsmasse (Vorderseite) enthaltende Polyesterfolie (Geber) wurde mit der Vorderseite auf kommerziell erhältliches Hitachi Color Video Print Paper (Nehmer) gelegt und aufgedrückt. Geber/Nehmer wurden dann mit Aluminiumfolie umwickelt und zwischen zwei beheizten Platten bei verschiedener Temperatur T (im Temperaturintervall 70 °C < T < 120 °C) erhitzt. Die in die glänzende Kunststoffschicht des Nehmers diffundierte Farbstoffmenge ist proportional der optischen Dichte (= Extinktion A). Letztere wurde photometrisch bestimmt. Trägt man den Logarithmus der im Temperaturintervall zwischen 80 und 110 °C gemessenen Extinktion A der angefärbten Nehmerpapiere gegen die zugehörige reziproke absolute Temperatur auf, so erhält man Geraden, aus deren Steigung die Aktivierungsenergie $\Delta E_T$ für das Transferexperiment berechnet wird:

$$\Delta E_T = 2,3 \cdot R \cdot \frac{\Delta \log A}{\Delta\left[\frac{1}{T}\right]}$$

Zur vollständigen Charakterisierung wurde aus den Auftragungen zusätzlich die Temperatur T*[ °C] entnommen, bei der, falls nicht anders angegeben, die Extinktion A der angefärbten Nehmerpapiere den Wert 2 erreicht.

Die in den folgenden Tabellen aufgeführten Farbstoffe wurden nach A) verarbeitet und die erhaltenen, mit Farbstoff beschichteten Träger nach B) auf das Transferverhalten geprüft. In der Tabelle sind jeweils die Thermotransferparameter T* und $\Delta E_T$, die Absorptionsmaxima der Farbstoffe $\lambda_{max}$ (gemessen in Methylenchlorid), die verwendeten Bindemittel sowie das Gewichtsverhältnis von Farbstoff:Bindemittel:Hilfsmittel aufgeführt.

Dabei gelten folgende Abkürzungen:

| | |
|---|---|
| B = | Bindemittel (EC = Ethylcellulose, EHEC = Ethylhydroxyethycellulose, AC = Celluloseacetobutyrat, MS = Mischung aus Polyvinylbutyrat und Ethylcellulose im Gewichtsverhältnis 2:1) |
| F = | Farbstoff |
| Chol = | Cholesterin (Hilfsmittel) |

Tabelle 1

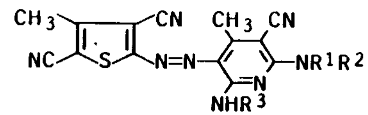

| Beispiel Nr. | $R^1$ | $R^2$ | $R^3$ | λmax [nm] | B | Chol. | F:B:Chol. | T* [°C] | $\Delta E_T$ [kcal/mol] |
|---|---|---|---|---|---|---|---|---|---|
| 1 | $C_2H_5$ | $C_2H_5$ | $C_3C_6OC_2H_4OC_6H_5$ | 544 | EC | - | 1:4 | 106 | 17 |
| 2 | $C_2H_4OCH_3$ | $C_2H_4OCH_3$ | $C_3H_6OC_2H_4OC_6H_5$ | 543 | EC | - | 1:4 | 109 | 14 |
| 3 | $C_2H_5$ | $C_2H_5$ | $C_3H_6OCH_3$ | 544 | EHE | - | 1:4 | 105 | 12 |
| 4 | $C_2H_5$ | $C_2H_5$ | $C_3H_6OCH_3$ | 544 | AC | - | 1:4 | 110 | 16 |
| 5 | $C_2H_5$ | $C_2H_5$ | $C_3H_6OCH_3$ | | EC | - | 1:3 | 96 | 24 |
| 6 | $C_2H_4OCH_3$ | $C_2H_4OCH_3$ | $C_3H_6OC_2H_4OC_6H_5$ | 543 | EHEC | - | 1:4 | 109 | 13 |
| 7 | $C_2H_4OCH_3$ | $C_2H_4OCH_3$ | $C_3H_6OC_2H_4OC_6H_5$ | 543 | EC | + | 1:4:0,75 | 92 | 25 |
| 8 | $C_2H_4OCH_3$ | $C_2H_4OCH_3$ | $C_3H_6OC_2H_4OC_6H_5$ | 543 | EC | - | 1:2 | 91 | 24 |
| 9 | H | $C_3H_6OCH_3$ | $C_3H_6O(C_2H_4O)_2C_2H_5$ | 532 | EC | - | 1:4 | 113 | 21 |
| 10 | H | $C_3H_6O(C_2H_4O)_2CH_3$ | $C_6H_5$ | 547 | EC | + | 1:4:0,75 | 111 | 25 |
| 11 | H | $C_3H_6OCH_3$ | $C_3H_6O(C_2H_4O)_2CH_3$ | 533 | EC | + | 1:4:0,75 | 93 | 19 |
| 12 | H | $C_3H_6OCH_3$ | $C_3H_6O(C_2H_4O)_2CH_3$ | 533 | EHEC | + | 1:4:0,75 | 90 | 28 |
| 13 | H | $C_3H_6OCH_3$ | $C_3H_6OC_2H_4OC_4H_9$ | 534 | EC | + | 1:4:0,75 | 96 | 23 |
| 14 | H | $C_3H_6OCH_3$ | $C_3H_6OC_2H_4OC_4H_9$ | 534 | EHEC | + | 1:4:0,75 | 92 | 31 |
| 15 | H | $C_3H_6O(C_2H_4O)_2C_4H_9$ | $C_3H_6OCH_3$ | 535 | EC | - | 1:2 | 95 | 31 |
| 16 | H | $C_3H_6O(C_2H_4O)_2C_4H_9$ | $C_3H_6OCH_3$ | 535 | EC | - | 1:4 | 101 | 24 |
| 17 | H | $C_3H_6O(C_2H_4O)_2C_4H_9$ | $C_3H_6OCH_3$ | 535 | EC | + | 1:4:0,75 | 95 | 24 |

Tabelle 1 - Forts.

| Beispiel Nr. | R1 | R2 | R3 | λmax [nm] | B | Chol. | F:B:Chol. | T* [°C] | $\Delta E_T$ [kcal/mol] |
|---|---|---|---|---|---|---|---|---|---|
| 18 | H | $C_2H_4OC_4H_9$ | $C_2H_4OC_4H_9$ | 530 | EC | + | 1:4:0,75 | 102 | 21 |
| 19 | $C_2H_4OCH_3$ | $C_2H_4OCH_3$ | $C_3H_6-OCOCH_3$ | 528 | EC | + | 1:4 | 130 | 20 |
| 20 | H | $C_3H_6OC_2H_4OC_4H_9$ | $C_2H_5$ | 530 | EC | + | 1:5:0,75 | | |
| 21 | $C_2H_5$ | $C_2H_5$ | $C_2H_4OCH_3$ | 541 | EC | + | 1:4:0,75 | 97 | 25 |
| 22 | H | $C_3H_6OC_2H_4OC_4H_9$ | $C_3H_6OCH_3$ | 534 | EC | + | 1:4:0,5 | 88 | 20 |
| 23 | H | $C_3H_6OC_2H_4OC_4H_9$ | $C_3H_6OCH_3$ | 534 | EC | + | 1:4:0,75 | 88 | 32 |
| 24 | H | $C_3H_6OC_2H_4OC_4H_9$ | $C_3H_6OCH_3$ | 534 | EC | + | 1:4:1,0 | 85 | 25 |
| 25 | H | $C_3H_6OC_2H_4OC_4H_9$ | $C_3H_6OCH_3$ | 534 | EC | - | 1:4 | 94 | 20 |
| 26 | H | $C_3H_6O(C_2H_4O)_2C_4H_9$ | $C_5H_{10}CN$ | 532 | EC | - | 1:4 | 100 | 23 |
| 27 | H | $C_4H_9$ | $C_3H_6OC_2H_4OC_6H_5$ | 534 | EC | - | 1:4 | 127 | 11 |
| 28 | $C_2H_5$ | $C_3H_6OCH_3$ | $C_3H_6OC_2H_4OC_6H_5$ | 545 | MS | - | 1:4 | 119 | 18 |
| 29 | $C_2H_4OCH_3$ | $C_2H_4OCH_3$ | $C_3H_6OCOCH_3$ | 541 | MS | - | 1:4 | 107 | 9,0 |

Tabelle 2

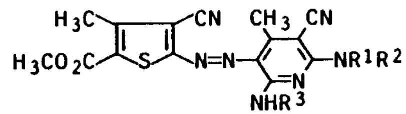

| Beispiel Nr. | R1 | R2 | R3 | λmax [nm] | B | Chol. | F:B:Chol. | T* [°C] | $\Delta E_T$ [kcal/mol] |
|---|---|---|---|---|---|---|---|---|---|
| 30 | $C_2H_4OCH_3$ | $C_2H_4OCH_3$ | $C(CH_3)_2C_2H_5$ | 534 | EC | + | 1:4:0,75 | 100 | 32 |
| 31 | $C_2H_5$ | $C_2H_5$ | $C_2H_4OCH_3$ | 534 | EC | + | 1:4:0,75 | 104 | 26 |
| 32 | H | $CH(CH_3)-C_3H_6CH(CH_3)_2$ | $CH(CH_3)-C_3H_6CH(CH_3)_2$ | 530 | EC | + | 1:4:0,75 | 101 | 29 |
| 33 | $C_2H_5$ | $C_2H_5$ | $(CH_2)_3OCH_3$ | 536 | EC | + | 1:4:0,75 | 97 | 27 |
| 34 | $C_2H_4OCH_3$ | $C_2H_4OCH_3$ | $C_3H_6OCOCH_3$ | 534 | EC | + | 1:4:0,75 | 94 | 23 |
| 35 | $C_2H_4OCH_3$ | $C_2H_4OCH_3$ | $C_3H_6OC_2H_4OC_6H_5$ | 534 | EC | – | 1:4 | 110 | 26 |
| 36 | $C_2H_4OCH_3$ | $C_2H_4OCH_3$ | $C_3H_6OC_2H_4OC_6H_5$ | 534 | EHE | – | 1:4 | 104 | 17 |
| 37 | H | $C_3H_6OCH_3$ | $C_3H_6OC_2H_4OC_4H_9$ | 532 | EC | – | 1:4 | 115 | 19 |
| 38 | H | $C_3H_6OCH_3$ | $C_3H_6O(C_2H_4O)_2C_4H_9$ | 532 | EC | – | 1:4 | 110 | 25 |
| 39 | H | $C_3H_6OC_2H_4OC_6H_5$ | H | 515 | EC | + | 1:4:0,75 | 115 | 21 |
| 40 | H | $C_2H_6OC_2H_4OC_2H_5$ | H | 514 | EC | + | 1:4:0,75 | 109 | 31 |
| 41 | H | $C_3H_6OC_4H_8OC_4H_9$ | H | 515 | EC | + | 1:4:0,75 | 106 | 32 |
| 42 | H | $C_3H_6OC_2H_4OCH_3$ | H | 515 | EC | + | 1:4:0,75 | 108 | 30 |
| 43 | H | $C_3H_6OC_4H_8OC_2H_5$ | H | 515 | EC | + | 1:4:0,75 | 106 | 30 |
| 44 | $C_2H_5$ | $C_2H_5$ | $C_3H_6OC_2H_4OC_6H_5$ | 537 | EC | + | 1:4:0,75 | 98 | 21 |

Tabelle 2 - Forts.

| Beispiel Nr. | $R^1$ | $R^2$ | $R^3$ | λmax [nm] | B | Chol. | F:B:Chol. | T* [°C] | $\Delta E_T$ $\left[\frac{kcal}{mol}\right]$ |
|---|---|---|---|---|---|---|---|---|---|
| 45 | $C_2H_4OCH_3$ | $C_2H_4OCH_3$ | $C_3H_6OC_2H_5$ | 534 | EC | - | 1:4 | 113 | 24 |
| 46 | H | $C_3H_6O(C_2H_4O)_2C_4H_9$ | H | 513 | EC | - | 1:4 | 113 | 27 |
| 47 | $C_2H_5$ | $C_2H_5$ | $C_3H_6OC_2H_4OC_6H_5$ | 536 | EC | - | 1:4 | 112 | 19 |
| 48 | $C_2H_5$ | $C_3H_6OCH_3$ | $C_3H_6OCH_3$ | 537 | MS | - | 1:4 | 105 | 13 |
| 49 | $C_2H_5$ | $C_3H_6OCH_3$ | $C_3H_6OC_2H_4OC_6H_5$ | 537 | EC | - | 1:4 | 98 | 20 |

Tabelle 3

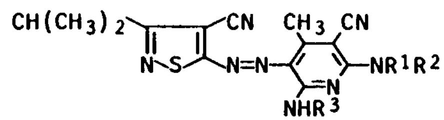

| Beispiel Nr. | $R^1$ | $R^2$ | $R^3$ | λmax [nm] | B | Chol. | F:B:Chol. | T* [°C] | $\Delta E_T$ [kcal/mol] |
|---|---|---|---|---|---|---|---|---|---|
| 50 | $C_2H_5$ | $C_2H_5$ | $C_3H_6OC_2H_5$ | 522 | EC | + | 1:4:0,75 | 92 | 28 |

Tabelle 4

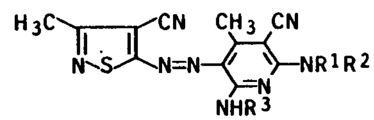

| Beispiel Nr. | $R^1$ | $R^2$ | $R^3$ | λmax [nm] | B | Chol. | F:B:Chol. | T* [°C] | $\Delta E_T$ [kcal/mol] |
|---|---|---|---|---|---|---|---|---|---|
| 51 | $C_2H_5$ | $C_2H_5$ | $C_3H_6OCH_3$ | 522 | EC | + | 1:4:0,75 | 84 | 21 |
| 52 | H | $C_6H_5$ | $C_3H_6OC_2H_4OCH_3$ | 524 | EC | + | 1:4:0,75 | 100 | 32 |
| 53 | H | 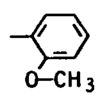 | $C_3H_6OC_2H_4OCH_3$ | 532 | EC | + | 1:4:0,75 | 93 | 22 |
| 54 | H | $C_3H_6OC_4H_8OC_2H_5$ | H | 494 | EC | + | 1:4:0,75 | 90 | 21 |

Tabelle 5

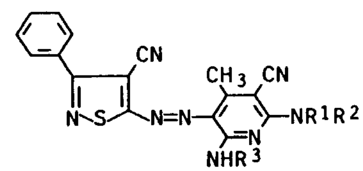

| Beispiel Nr. | $R^1$ | $R^2$ | $R^3$ | λmax [nm] | B | Chol. | F:B:Chol. | T* [°C] | $\Delta E_T$ [kcal/mol] |
|---|---|---|---|---|---|---|---|---|---|
| 55 | $C_2H_5$ | $C_2H_5$ | $C_3H_6OC_2H_4OC_6H_5$ | 527 | EC | + | 1:2:0,75 | 100 | 30 |
| 56 | $C_2H_4OCH_3$ | $C_2H_4OCH_3$ | $C_3H_6OC_2H_5$ | 526 | EC | + | 1:2:0,75 | 91 | 29 |
| 57 | H | $C_6H_5$ | $C_3H_6O(C_2H_4O)_2CH_3$ | 527 | EC | + | 1:4:0,75 | 116 | 24 |
| 58 | $C_2H_4OCH_3$ | $C_2H_4OCH_3$ | 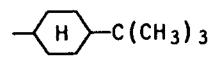 | 527 | EC | + | 1:4:0,75 | 108 | 27 |
| 59 | H | $C_3H_6O(C_2H_4O)_2CH_3$ | $C_6H_5$ | 528 | EC | – | 1:4 | 127 | 20 |

Tabelle 6

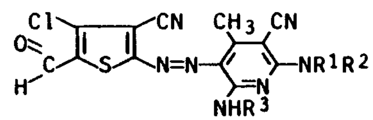

| Beispiel Nr. | $R^1$ | $R^2$ | $R^3$ | λmax [nm] | B | Chol. | F:B:Chol. | T* [°C] | $\Delta E_T$ [kcal/mol] |
|---|---|---|---|---|---|---|---|---|---|
| 60 | H | $C_6H_5$ | $C_3H_6O(C_2H_4O)_2CH_3$ | 557 | EC | + | 1:2:0,75 | 107 | 22 |
| 61 | H | $C_3H_6OCHCH_3CH_2OCH_3$ | H | 537 | EC | + | 1:4:0,75 | 101 | 30 |
| 62 | H | $C_3H_6OC_2H_4OC_2H_5$ | H | 534 | EC | + | 1:4:0,75 | 95 | 23 |
| 63 | H | $C_3H_6OC_2H_4OC_4H_9$ | H | 537 | EC | + | 1:4:0,75 | 107 | 29 |
| 64 | $C_3H_7$ | $C_3H_7$ | $C_3H_6OC_2H_4OC_6H_5$ | 565 | EC | - | 1:4 | 106 | 20 |
| 65 | H | $CH_2CH_2OCOCH_3$ | $C_3H_6OC_2H_4OC_6H_5$ | 547 | MS | - | 1:4 | 116 | 14 |

Tabelle 7

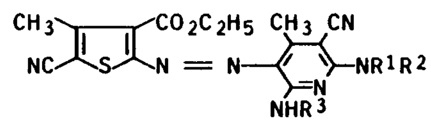

| Beispiel Nr. | $R^1$ | $R^2$ | $R^3$ | λmax [nm] | B | Chol. | F:B:Chol. | T* [°C] | $\Delta E_T$ [kcal/mol] |
|---|---|---|---|---|---|---|---|---|---|
| 66 | H | $C_3H_6OC_4H_8OC_4H_9$ | H | 515 | EC | + | 1:4:0,75 | 102 | 24 |
| 67 | H | $C_3H_6OC_2H_4OC_4H_9$ | H | 514 | EC | + | 1:4:0,75 | 100 | 32 |

Tabelle 8

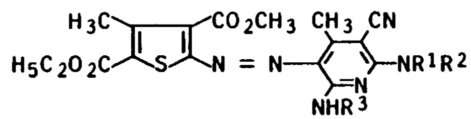

| Beispiel Nr. | $R^1$ | $R^2$ | $R^3$ | λmax [nm] | B | Chol. | F:B:Chol. | T* [°C] | $\Delta E_T$ [kcal/mol] |
|---|---|---|---|---|---|---|---|---|---|
| 68 | H | $C_3H_6OC_2H_4OC_4H_9$ | $C_2H_5$ | 519 | EC | + | 1:4:0,75 | 97 | 26 |
| 69 | H | $C_3H_6OC_2H_4OC_4H_9$ | $C_3H_6OC_4H_8OC_4H_9$ | 526 | EC | + | 1:4:0,75 | 96 | 24 |

Tabelle 9

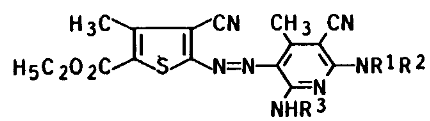

| Beispiel Nr. | $R^1$ | $R^2$ | $R^3$ | λmax [nm] | B | Chol. | F:B:Chol. | T* [°C] | $\Delta E_T$ [kcal/mol] |
|---|---|---|---|---|---|---|---|---|---|
| 70 | $C_2H_4OCH_3$ | $C_2H_4OCH_3$ | $C_3H_6OCH_3$ | 534 | EC | - | 1:4 | 112 | 24 |
| 71 | $C_2H_4OCH_3$ | $C_2H_4OCH_3$ | $C_3H_6OC_2H_4OC_6H_5$ | 534 | EC | - | 1:4 | 112 | 24 |

Tabelle 10

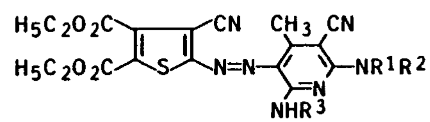

| Beispiel Nr. | $R^1$ | $R^2$ | $R^3$ | λmax [nm] | B | Chol. | F:B:Chol. | T* [°C] | $\Delta E_T$ [kcal/mol] |
|---|---|---|---|---|---|---|---|---|---|
| 72 | H | $C_3H_6OC_2H_4OC_2H_5$ | H | 520 | EC | + | 1:4:0,75 | 98 | 20 |
| 73 | $C_2H_5$ | $C_2H_5$ | $C_3H_6OC_4H_8OC_4H_9$ | 545 | EC | + | 1:4:0,75 | 96 | 25 |

Tabelle 11

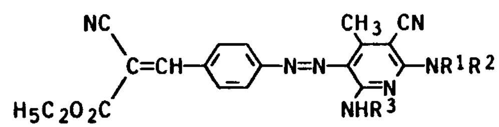

| Beispiel Nr. | $R^1$ | $R^2$ | $R^3$ | λmax [nm] | B | Chol. | F:B:Chol. | T* [°C] | $\Delta E_T$ $\left[\frac{kcal}{mol}\right]$ |
|---|---|---|---|---|---|---|---|---|---|
| 74 | H | $CH(C_2H_5)CH_2OCH_3$ | $CH(C_2H_5)CH_2OCH_3$ | 502 | EC | + | 1:4:0,75 | 95 | 22 |
| 75 | H | $CH(C_2H_5)CH_2OCH_3$ | $CH(CH_3)_2$ | 503 | EC | + | 1:4:0,75 | 100 | 24 |

Tabelle 12

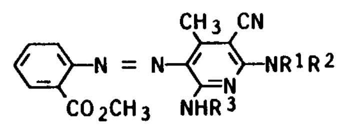

| Beispiel Nr. | $R^1$ | $R^2$ | $R^3$ | λmax [nm] | B | Chol. | F:B:Chol. | T* [°C] | $\Delta E_T$ [kcal/mol] |
|---|---|---|---|---|---|---|---|---|---|
| 76 | H | $C_6H_5$ | $C_3H_6OC_2H_4OCH_3$ | 442 | EC | - | 1:4 | 107 | 26 |

Tabelle 13

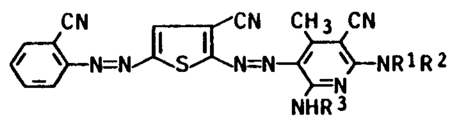

| Beispiel Nr. | $R^1$ | $R^2$ | $R^3$ | λmax [nm] | B | Chol. | F:B:Chol. | T* [°C] | $\Delta E_T$ [kcal/mol] |
|---|---|---|---|---|---|---|---|---|---|
| 77 | $C_2H_4OCH_3$ | $C_2H_4OCH_3$ | $C_3H_6OC_2H_5$ | 619 | EC | + | 1:4:0,75 | 100 | 29 |
| 78 | $C_2H_4OCH_3$ | $C_2H_4OCH_3$ | $C_3H_6OCH_3$ | 619 | EC | + | 1:4:0,75 | 110 | 26 |
| 79 | $C_2H_4OC_2H_4OC_2H_5$ | $C_2H_4OC_2H_4OC_2H_5$ | $C_3H_6OCH_3$ | 618 | EC | - | 1:4 | 123 | 17 |

Tabelle 14

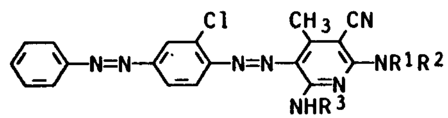

| Beispiel Nr. | R1 | R2 | R3 | λmax [nm] | B | Chol. | F:B:Chol. | T* [°C] | $\Delta E_T$ [kcal/mol] |
|---|---|---|---|---|---|---|---|---|---|
| 80 | $C_2H_5$ | $C_2H_5$ | $C_2H_4OCH_3$ | 508 | EC | + | 1:4:0,75 | 94 | 31 |
| 81 | $C_2H_5$ | $C_2H_5$ | $C_3H_6OC_2H_5$ | 515 | EC | - | 1:2 | 86 | 28 |
| 82 | $C_2H_5$ | $C_2H_5$ | $C_3H_6OC_2H_5$ | 515 | EC | + | 1:4:0,75 | 93 | 30 |
| 83 | $C_2H_4OCH_3$ | $C_2H_4OCH_3$ | $C_3H_6OCH_3$ | 508 | EC | - | 1:2 | 89 | 17 |
| 84 | $C_2H_4OCH_3$ | $C_2H_4OCH_3$ | $C_3H_6OCH_3$ | 508 | EC | + | 1:4:0,75 | 95 | 25 |
| 85 | H | $C_2H_4OC_4H_9$ | $C_2H_4OC_4H_9$ | 505 | EC | - | 1:4 | 109 | 30 |
| 86 | H | $C_3H_6OC_2H_4OC_4H_9$ | $C_3H_6OCH_3$ | 504 | EC | - | 1:4 | 103 | 26 |
| 87 | H | $C_3H_6O(C_2H_4O)_2C_4H_9$ | $C_3H_6OCH_3$ | 497 | EC | - | 1:4 | 105 | 30 |

Tabelle 15

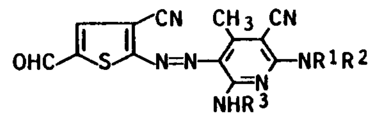

| Beispiel Nr. | $R^1$ | $R^2$ | $R^3$ | λmax [nm] | B | Chol. | F:B:Chol. | T* [°C] | $\Delta E_T$ $\left[\frac{kcal}{mol}\right]$ |
|---|---|---|---|---|---|---|---|---|---|
| 88 | $C_2H_5$ | $C_2H_5$ | $C_3H_6O_2H_4OC_6H_5$ | 548 | EC | - | 1:4 | 123 | 15 |

Tabelle 16

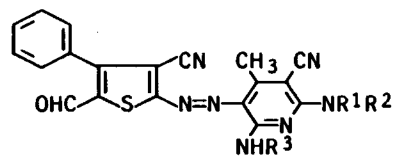

| Beispiel Nr. | $R^1$ | $R^2$ | $R^3$ | λmax [nm] | B | Chol. | F:B:Chol. | T* [°C] | $\Delta E_T$ [kcal/mol] |
|---|---|---|---|---|---|---|---|---|---|
| 89 | $C_2H_4OCH_3$ | $C_2H_4OCH_3$ | $C_3H_6OCH_3$ | 555 | EC | - | 1:4 | 110 | 23 |
| 90 | $C_2H_4OCH_3$ | $C_2H_4OCH_3$ | $C_3H_6OC_2H_5$ | 558 | EC | - | 1:4 | 111 | 18 |

Tabelle 17

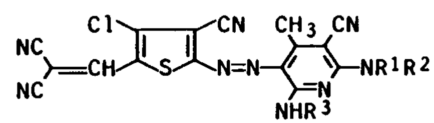

| Beispiel Nr. | $R^1$ | $R^2$ | $R^3$ | λmax [nm] | B | Chol. | F:B:Chol. | T* [°C] | $\Delta E_T$ [kcal/mol] |
|---|---|---|---|---|---|---|---|---|---|
| 91 | $C_2H_5$ | $C_2H_5$ | $C_3H_6OC_2H_5$ | 614 | EC | - | 1:4 | 104 | 35 |
| 92 | $C_2H_5$ | $C_2H_5$ | $C_3H_6OC_2H_4OC_6H_5$ | 615 | EC | - | 1:4 | 100 | 25 |
| 93 | $C_2H_5$ | $C_2H_5$ | $(CH_2)_4OC_4H_9$ | 614 | EC | - | 1:4 | 108 | 24 |
| 94 | $C_3H_7$ | $C_3H_7$ | $C_3H_6OC_2H_4OC_6H_5$ | 618 | MS | - | 1:4 | 118 | 13 |
| 95 | $C_3H_7$ | $C_3H_7$ | $C_3H_6OC_2H_4OC_6H_5$ | 618 | EC | - | 1:4 | 100 | 30 |

Tabelle 18

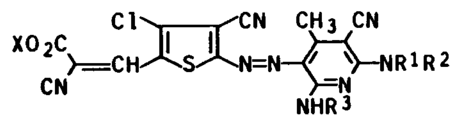

| Beispiel Nr. | X | $R^1$ | $R^2$ | $R^3$ | λmax [nm] | B | Chol. | F:B:Chol. | T* [°C] | $\Delta E_T$ [kcal/mol] |
|---|---|---|---|---|---|---|---|---|---|---|
| 96 | $C_4H_9$ | $C_2H_5$ | $C_2H_5$ | $C_3H_6OC_2H_5$ | 598 | EC | - | 1:4 | 117 | 28 |
| 97 | $C_4H_9$ | $C_3H_7$ | $C_3H_7$ | $C_3H_6OC_2H_4OC_6H_5$ | 601 | EC | - | 1:4 | 127 | 16 |

Tabelle 19

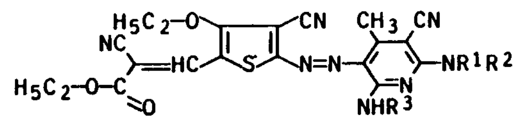

| Beispiel Nr. | $R^1$ | $R^2$ | $R^3$ | λmax [nm] | B | Chol. | F:B:Chol. | T* [A=1] [°C] | $\Delta E_T$ [kcal/mol] |
|---|---|---|---|---|---|---|---|---|---|
| 98 | $C_2H_4OCH_3$ | $C_2H_4OCH_3$ | $C_3H_6OH_3$ | 601 | EC | - | 1:4 | 127 | 16 |
| 99 | $C_2H_4OCH_3$ | $C_2H_4OCH_3$ | $C_3H_6OC_2H_4OC_6H_5$ | 601 | EC | - | 1:4 | 129 | 15 |
| 100 | $C_2H_4OCH_3$ | $C_2H_4OCH_3$ | $C_3H_6OC_2H_4OC_6H_5$ | 607 | EC | - | 1:4 | 124 | 15 |
| 101 | $C_2H_4OCH_3$ | $C_2H_4OCH_3$ | $C_4H_9$ | 605 | EC | + | 1:4:0,75 | 98 | 21 |

Tabelle 20

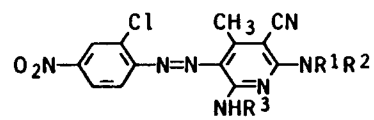

| Beispiel Nr. | $R^1$ | $R^2$ | $R^3$ | λmax [nm] | B | Chol. | F:B:Chol. | T* [°C] | $\Delta E_T$ [kcal/mol] |
|---|---|---|---|---|---|---|---|---|---|
| 102 | $C_2H_5$ | $C_2H_5$ | $C_3H_6OCH_3$ | 517 | EC | + | 1:4:0,75 | 84 | 15 |
| 103 | $C_2H_5$ | $C_2H_5$ | $C_3H_6OC_2H_4OC_6H_5$ | 518 | EC | + | 1:4:0,75 | 87 | 20 |
| 104 | $C_2H_4OCH_3$ | $C_2H_4OCH_3$ | $C_2H_4OCH_3$ | 504 | EC | + | 1:4:0,75 | 97 | 22 |
| 105 | H | $C_2H_4OCONHC_4H_9$ | $C_2H_5$ | 501 | EC | + | 1:4:0,75 | 111 | 24 |

Tabelle 21

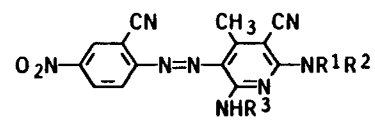

| Beispiel Nr. | $R^1$ | $R^2$ | $R^3$ | λmax [nm] | B | Chol. | F:B:Chol. | T* [°C] | $\Delta E_T$ [kcal/mol] |
|---|---|---|---|---|---|---|---|---|---|
| 106 | $C_2H_5$ | $C_2H_5$ | $C_3H_6OC_2H_4OC_6H_5$ | 531 | EC | - | 1:4 | 107 | 16 |

Tabelle 22

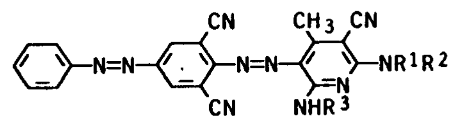

| Beispiel Nr. | $R^1$ | $R^2$ | $R^3$ | λmax [nm] | B | Chol. | F:B:Chol. | T* [°C] | $\Delta E_T$ [kcal/mol] |
|---|---|---|---|---|---|---|---|---|---|
| 107 | $C_2H_5$ | $C_2H_5$ | $C_3H_6OCH_3$ | 555 | EC | - | 1:4 | 118 | 16 |

Tabelle 23

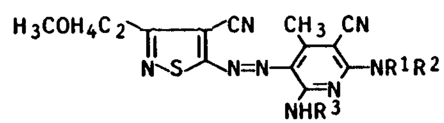

| Beispiel Nr. | $R^1$ | $R^2$ | $R^3$ | λmax [nm] | B | Chol. | F:B:Chol. | T* [°C] | $\Delta E_T$ [kcal/mol] |
|---|---|---|---|---|---|---|---|---|---|
| 108 | H | 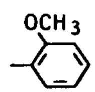 | $C_3H_6OC_2H_4OCH_3$ | 532 | EC | - | 1:4 | 102 | 15 |

Tabelle 24

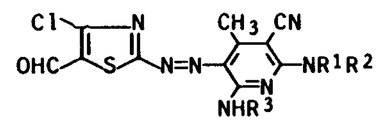

| Beispiel Nr. | R1 | R2 | R3 | λmax [nm] | B | Chol. | F:B:Chol. | T* [°C] | $\Delta E_T$ [kcal/mol] |
|---|---|---|---|---|---|---|---|---|---|
| 109 | $C_2H_4OCH_3$ | $C_2H_4OCH_3$ | $C_3H_6OC_2H_4OC_6H_5$ | 535 | MS | - | 1:4 | 87 | 21 |
| 110 | $C_2H_5$ | $C_3H_6OCH_3$ | $C_3H_6OC_2H_4OC_6H_5$ | 537 | MS | - | 1:4 | 91 | 19 |

Tabelle 25

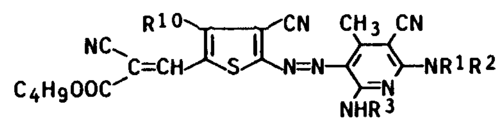

| Beispiel Nr. | $R^1$ | $R^2$ | $R^3$ | $R^{10}$ | λmax [nm] | B | Chol. | F:B:Chol. | T* [°C] | $\Delta E_T$ [kcal/mol] |
|---|---|---|---|---|---|---|---|---|---|---|
| 111 | $C_2H_5$ | $C_2H_5$ | $C_3H_6OC_2H_4OC_6H_5$ | H | 595 | MS | - | 1:4 | 118 | 16 |
| 112 | $C_2H_5$ | $C_2H_5$ | $C_3H_6OC_2H_4OC_6H_5$ | $CH_3$ | 598 | MS | - | 1:4 | 122 | 14 |

Tabelle 26

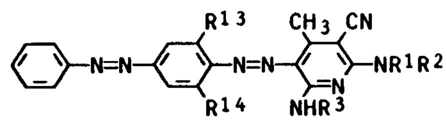

| Beispiel Nr. | R1 | R2 | R3 | R13 | R14 | λmax [nm] | B | Chol. | F:B:Chol. | T* [°C] | $\Delta E_T$ [kcal/mol] |
|---|---|---|---|---|---|---|---|---|---|---|---|
| 123 | H | $C_3H_6OC_2H_4OCH_3$ | $C_6H_5$ | H | H | 495 | EC | + | 1:4:0,75 | 113 | 32 |

Tabelle 27

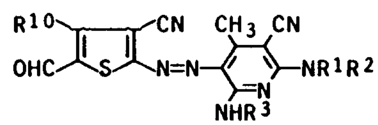

| Beispiel Nr. | $R^1$ | $R^2$ | $R^3$ | $R^{10}$ | λmax [nm] | B | Chol. | F:B:Chol. | T* [°C] | $\Delta E_T$ [kcal/mol] |
|---|---|---|---|---|---|---|---|---|---|---|
| 114 | H | $C_3H_6OC_2H_4OCH_3$ | $C_3H_6OC_2H_4OC_6H_5$ | $CH_3$ | 540 | MS | - | 1:4 | 109 | 14 |

Tabelle 28

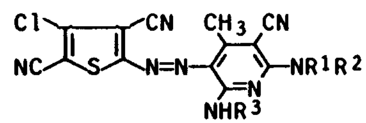

| Beispiel Nr. | $R^1$ | $R^2$ | $R^3$ | λmax [nm] | B | Chol. | F:B:Chol. | T* [°C] | $\Delta E_T$ $\left[\frac{kcal}{mol}\right]$ |
|---|---|---|---|---|---|---|---|---|---|
| 115 | H | $C_3H_6OCH(CH_3)_2$ | $C_3H_6OC_2H_4OC_6H_5$ | 544 | MS | - | 1:4 | 107 | 20 |
| 116 | H | $C_3H_6OC_2H_4OCH_3$ | $C_3H_6OC_2H_4OC_6H_5$ | 544 | MS | - | 1:4 | 106 | 17 |

Tabelle 29

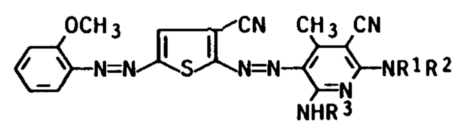

| Beispiel Nr. | $R^1$ | $R^2$ | $R^3$ | λmax [nm] | B | Chol. | F:B:Chol. | T* [°C] | $\Delta E_T$ [kcal/mol] |
|---|---|---|---|---|---|---|---|---|---|
| 117 | $C_2H_4OCH_3$ | $C_2H_4OCH_3$ | $C_3H_6OC_2H_5$ | 601 | EC | - | 1:4 | 126 | 17 |

Tabelle 30

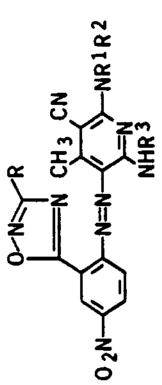

| Beispiel Nr. | R1 | R2 | R3 | R | λmax [nm] | B | Chol. | F:B:Chol. | T* [°C] | $\Delta E_T$ [kcal/mol] |
|---|---|---|---|---|---|---|---|---|---|---|
| 118 | H | $C_3H_6OCH_3$ | $C_3H_6OCH_3$ | $C_2H_4OC_2H_4OC_6H_5$ | 511 | EC | - | 1:4 | 121 | 17 |
| 119 | H | $C_2H_4OCH_3$ | $C_2H_4OCH_3$ | $C_2H_4OC_2H_4OC_6H_5$ | 510 | EC | - | 1:4 | 108 | 24 |
| 120 | H | $C_3H_6OCH_3$ | $C_3H_6OCH_3$ | $C_2H_4OC_3H_7$ | 520 | EC | - | 1:4 | 113 | 24 |
| 121 | H | $C_3H_6OCH_3$ | $C_3H_6OCH_3$ | $C_2H_4OCH_2C_6H_5$ | 521 | EC | + | 1:4:0,75 | 102 | 29 |
| 122 | H | $C_3H_6OCH_3$ | $C_3H_6OCH_3$ | $CH_2OCH_3$ | 523 | EC | + | 1:4:0,75 | 121 | 15 |

## Patentansprüche

1. Verfahren zur Übertragung von Azofarbstoffen von einem Träger auf ein mit Kunststoff beschichtetes Papier durch Diffusion, mit Hilfe eines Thermokopfes, dadurch gekennzeichnet, daß man einen Träger

verwendet, auf dem sich ein oder mehrere Azofarbstoffe der Formel I

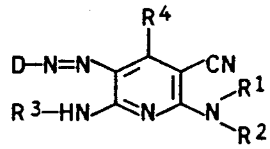

(I)

befinden, in der

- $R^1$, $R^2$ und $R^3$ gleich oder verschieden sind und unabhängig voneinander jeweils Alkyl, Alkoxyalkyl, Alkanoyloxyalkyl, Alkoxycarbonyloxyalkyl oder Alkoxycarbonylalkyl, wobei diese Reste jeweils bis zu 20 Kohlenstoffatome aufweisen und durch Phenyl, $C_1$-$C_4$-Alkylphenyl, $C_1$-$C_4$-Alkoxyphenyl, Halogenphenyl, Benzyloxy, $C_1$-$C_4$-Alkylbenzyloxy, $C_1$-$C_4$-Alkoxybenzyloxy, Halogenbenzyloxy, Halogen, Hydroxy oder Cyano substituiert sein können, Wasserstoff, gegebenenfalls durch $C_1$-$C_{15}$-Alkyl, $C_1$-$C_{15}$-Alkoxy, Halogen oder Benzyloxy substituiertes Phenyl, gegebenenfalls durch $C_1$-$C_{15}$-Alkyl, $C_1$-$C_{15}$-Alkoxy, Halogen oder Benzyloxy substituiertes Cyclohexyl oder einen Rest der Formel II

$$\left[-Y-O\right]_m-R^5 \qquad (II),$$

worin

- Y für $C_2$-$C_6$-Alkylen
- m für 1, 2, 3, 4, 5 oder 6 und
- $R^5$ für $C_1$-$C_4$-Alkyl oder gegebenenfalls durch $C_1$-$C_4$-Alkyl oder $C_1$-$C_4$-Alkoxy substituiertes Phenyl stehen, und
- $R^4$ $C_1$-$C_4$-Alkyl bedeuten und
- D den Rest einer Diazokomponente, der sich von einer Diazokomponente D-$NH_2$ der Formel

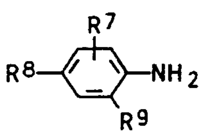

(IVa) ,

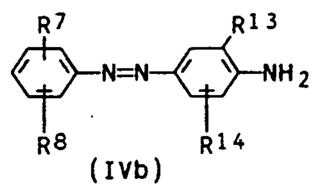

(IVb) ,

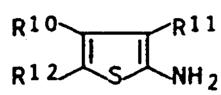

(IVc)

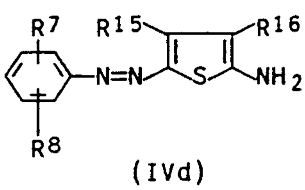

(IVd) ,

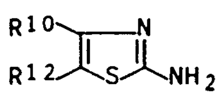

(IVe) ,

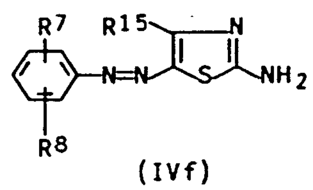

(IVf) ,

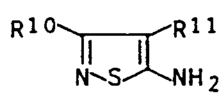

(IVg)

oder

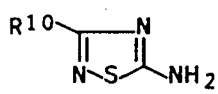

(IVh)

ableitet, wobei

$R^7$, $R^8$ und $R^9$ gleich oder verschieden sind und unabhängig voneinander jeweils Alkyl, Alkoxyalkyl, Alkoxycarbonylalkyl oder Alkanoyloxyalkyl, wobei diese Reste jeweils bis zu 12 Kohlenstoffatome aufweisen können, Wasserstoff, Cyano, Halogen, Nitro, einen Rest der Formel II

$[-Y-O]_m-R^5$ (II),

in der Y, $R^5$ und m jeweils die obengenannte Bedeutung besitzen, oder einen Rest der Formel $-CO-OR^{17}$, $-CO-NR^{17}R^{18}$, $-SO_2-R^{17}$, $-SO_2-OR^{17}$ oder $SO_2-NR^{17}R^{18}$, worin $R^{17}$ und $R^{18}$ gleich oder verschieden sind und unabhängig voneinander jeweils für Alkyl, Alkoxyalkyl, Alkoxycarbonylalkyl oder Alkanoyloxyalkyl, wobei diese Reste jeweils bis zu 12 Kohlenstoffatome aufweisen können, Wasserstoff oder für einen Rest der Formel II

$[-Y-O]_m-R^5$ (II),

in der Y, $R^5$ und m jeweils die obengenannte Bedeutung besitzen, stehen,

$R^{10}$ Wasserstoff, Chlor, Cyano, $C_1$-$C_8$-Alkyl, $C_1$-$C_8$-Alkoxy, $C_1$-$C_8$-Alkylthio, Alkoxyalkyl, das bis 8 Kohlenstoffatome aufweisen kann, Phenyl, das gegebenenfalls durch $C_1$-$C_4$-Alkyl, $C_1$-$C_4$-Alkoxy oder Benzyloxy substituiert ist, Benzyl, Benzyloxy oder einen Rest der Formel $-CO-OR^{17}$ oder $-CO-NR^{17}R^{18}$, worin $R^{17}$ und $R^{18}$ jeweils die obengenannte Bedeutung besitzen,

$R^{11}$ Wasserstoff, Cyano, Nitro oder einen Rest der Formel $-CO-OR^{17}$ oder $-CO-NR^{17}R^{18}$, worin $R^{17}$ und $R^{18}$ jeweils die obengenannte Bedeutung besitzen,

$R^{12}$ Cyano, Nitro, Formyl oder einen Rest der Formel $-CO-OR^{17}$, $-CO-NR^{17}R^{18}$ ,

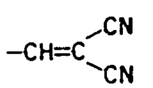 , 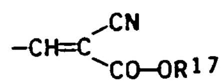

oder

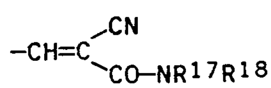 ,

worin $R^{17}$ und $R^{18}$ jeweils die obengenannte Bedeutung besitzen,

$R^{13}$ und $R^{14}$ gleich oder verschieden sind und unabhängig voneinander jeweils Wasserstoff, $C_1$-$C_4$-Alkyl, $C_1$-$C_4$-Alkoxy, Chlor, Cyano, Nitro oder einen Rest der Formel $-CO-OR^{17}$ oder $-CO-NR^{17}R^{18}$, worin $R^{17}$ und $R^{18}$ jeweils die obengenannte Bedeutung besitzen,

$R^{15}$ Wasserstoff, $C_1$-$C_4$-Alkyl oder Chlor und

$R^{16}$ Cyano oder einen Rest der Formel $-CO-OR^{17}$ oder $-CO-NR^{17}R^{18}$, worin $R^{17}$ und $R^{18}$ jeweils die obengenannte Bedeutung besitzen, bedeuten, wobei die folgenden Verbindungen ausgenommen sind:

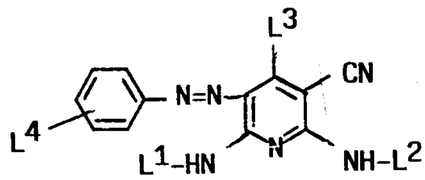

| $L^1$ | $L^2$ | $L^3$ | $L^4$ |
|---|---|---|---|
| $CH_3OC_2H_4$ | $CH_3OC_2H_4$ | $CH_3$ | 4-Cl |
| $CH_3OC_2H_4$ | $CH_3OC_2H_4$ | $CH_3$ | 4-$CO_2C_2H_5$ |
| $CH_3OC_2H_4$ | $CH_3OC_2H_4$ | $CH_3$ | 3-$CO_2C_2H_5$ |
| n-$C_4H_9$ | n-$C_4H_9$ | $CH_3$ | 2-$CO_2C_2H_5$ |
| $CH_3OC_2H_4$ | $CH_3OC_2H_4$ | $CH_3$ | 2-$CO_2C_2H_5$ |
| $CH_3OC_2H_4$ | $CH_3OC_2H_4$ | $CH_3$ | 2-$CON(C_2H_5)_2$ |
| $CH_3OC_2H_4$ | $CH_3OC_2H_4$ | $CH_3$ | 2-$CO_2C_2H_4CH(CH_3)_2$ |
| n-$C_4H_9$ | n-$C_4H_9$ | $CH_3$ | 2-CN |

2. Verfahren gemäß Anspruch 1, dadurch gekennzeichnet, daß sich auf dem Träger ein oder mehrere Azofarbstoffe der Formel I befinden, in der

$R^1$, $R^2$ und $R^3$ unabhängig voneinander Wasserstoff, Alkyl oder Alkoxyalkyl, wobei diese Reste jeweils bis zu 15 Kohlenstoffatome aufweisen und durch Phenyl, $C_1$-$C_4$-Alkylphenyl, $C_1$-$C_4$-Alkoxyphenyl oder Cyano substituiert sein können, oder einen Rest der Formel III

$$[-(CH_2)_3-O]_p[-CH_2-CH_2-O]_n-R^6 \quad (III),$$

worin

n für 1, 2, 3 oder 4,

p für 0 oder 1 und

$R^6$ für $C_1$-$C_4$-Alkyl oder Phenyl stehen, und

$R^4$ Methyl bedeuten.

## Claims

1. A process for transferring azo dyes from a transfer to a plastic-coated paper by diffusion with the aid of a thermal printing head, which comprises using a transfer on which there are one or more azo dyes of the formula I

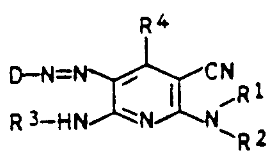

(I)

where

$R^1$, $R^2$ and $R^3$ are identical or different and each is independently of the others alkyl, alkoxyalkyl, alkanoyloxyalkyl, alkoxycarbonyloxyalkyl or alkoxycarbonylalkyl, which each may have up to 20 carbon atoms and be substituted by phenyl, $C_1$-$C_4$-alkylphenyl, $C_1$-$C_4$-alkoxyphenyl, halophenyl, benzyloxy, $C_1$-$C_4$-alkylbenzyloxy, $C_1$-$C_4$-alkoxybenzyloxy, halobenzyloxy, halogen, hydroxyl or cyano, or are each hydrogen, unsubstituted or $C_1$-$C_{15}$-alkyl-, $C_1$-$C_{15}$-alkoxy-, halogen- or benzyloxy-substituted phenyl, unsubstituted or $C_1$-$C_{15}$-alkyl-, $C_1$-$C_{15}$-alkoxy-, halogen- or benzyloxy-substituted

cyclohexyl or a radical of the formula II

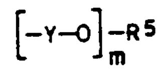 (II)

where

Y is $C_2$-$C_6$-alkylene,

m is 1, 2, 3, 4, 5 or 6 and

$R^5$ is $C_1$-$C_4$-alkyl or unsubstituted or $C_1$-$C_4$-alkyl- or $C_1$-$C_4$-alkoxy-substituted phenyl,

$R^4$ is $C_1$-$C_4$-alkyl and

D is a radical derived from a diazo component D-$NH_2$ of the formula

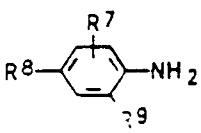
(IVa)
,
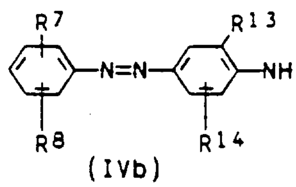
(IVb)
,
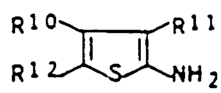
(IVc)

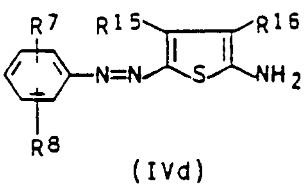
(IVd)
,
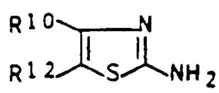
(IVe)
,
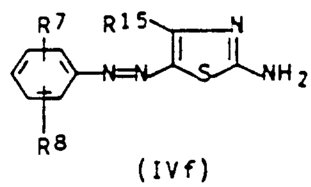
(IVf)
,

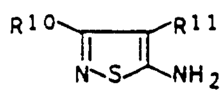
(IVg)

or

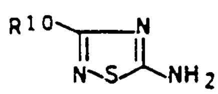
(IVh)

where

$R^7$, $R^8$ and $R^9$ are identical or different and each is independently of the others alkyl, alkoxyalkyl, alkoxycarbonylalkyl or alkanoyloxyalkyl, which may each have up to 12 carbon atoms, hydrogen, cyano, halogen, nitro, or a radical of the formula II

$[-Y-O]_m-R^5$ (II),

where Y, $R^5$ and m are each as defined above, or a radical of the formula -CO-$OR^{17}$, -CO-$NR^{17}R^{18}$, -$SO_2$-$R^{17}$, -$SO_2$-$OR^{17}$ or -$SO_2$-$NR^{17}R^{18}$, where $R^{17}$ and $R^{18}$ are identical or different and each is independently of the other alkyl, alkoxyalkyl, alkoxycarbonylalkyl or alkanoyloxyalkyl, which may each have up to 12 carbon atoms, hydrogen or a radical of the formula II

$[-Y-O]_m-R^5$ (II),

where Y, $R^5$ and m are each as defined above,

$R^{10}$ is hydrogen, chlorine, cyano, $C_1$-$C_8$-alkyl, $C_1$-$C_8$-alkoxy, $C_1$-$C_8$-alkylthio, alkoxyalkyl of up to 8 carbon atoms, phenyl, which may be substituted by $C_1$-$C_4$-alkyl, $C_1$-$C_4$-alkoxy or benzyloxy, benzyl, benzyloxy or a radical of the formula -CO-$OR^{17}$ or -CO-$NR^{17}R^{18}$ where $R^{17}$ and $R^{18}$ are each as defined above,

$R^{11}$ is hydrogen, cyano, nitro or a radical of the formula -CO-$OR^{17}$ or -CO-$NR^{17}R^{18}$ where $R^{17}$ and $R^{18}$ are each as defined above,

$R^{12}$ is cyano, nitro, formyl or a radical of the formula -CO-$OR^{17}$, -CO-$NR^{17}R^{18}$,

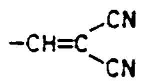 , 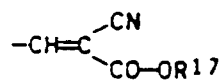

or

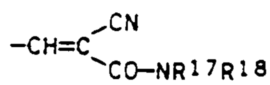 ,

where $R^{17}$ and $R^{18}$ are each as defined above,

$R^{13}$ and $R^{14}$ are identical or different and each is independently of the other hydrogen, $C_1$-$C_4$-alkyl, $C_1$-$C_4$-alkoxy, chlorine, cyano, nitro or a radical of the formula -CO-$OR^{17}$ or -CO-$NR^{17}R^{18}$ where $R^{17}$ and $R^{18}$ are each as defined above,

$R^{15}$ is hydrogen, $C_1$-$C_4$-alkyl or chlorine, and

$R^{16}$ is cyano or a radical of the formula -CO-$OR^{17}$ or -CO-$NR^{17}R^{18}$ where $R^{17}$ and $R^{18}$ are each as defined above, with the exception of the following compounds:

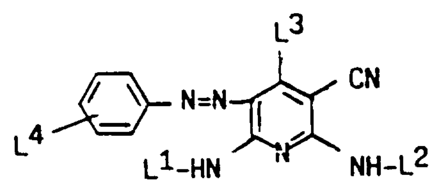

| $L^1$ | $L^2$ | $L^3$ | $L^4$ |
|---|---|---|---|
| $CH_3OC_2H_4$ | $CH_3OC_2H_4$ | $CH_3$ | 4-Cl |
| $CH_3OC_2H_4$ | $CH_3OC_2H_4$ | $CH_3$ | 4-$CO_2C_2H_5$ |
| $CH_3OC_2H_4$ | $CH_3OC_2H_4$ | $CH_3$ | 3-$CO_2C_2H_5$ |
| n-$C_4H_9$ | n-$C_4H_9$ | $CH_3$ | 2-$CO_2C_2H_5$ |
| $CH_3OC_2H_4$ | $CH_3OC_2H_4$ | $CH_3$ | 2-$CO_2C_2H_5$ |
| $CH_3OC_2H_4$ | $CH_3OC_2H_4$ | $CH_3$ | 2-$CON(C_2H_5)_2$ |
| $CH_3OC_2H_4$ | $CH_3OC_2H_4$ | $CH_3$ | 2-$CO_2C_2H_4CH(CH_3)_2$ |
| n-$C_4H_9$ | n-$C_4H_9$ | $CH_3$ | 2-CN |

**2.** A process as claimed in 1, wherein there are on the transfer used one or more azo dyes of formula I where

$R^1$, $R^2$ and $R^3$ are each independently of the others hydrogen, alkyl or alkoxyalkyl, each of which may have up to 15 carbon atoms and be substituted by phenyl, $C_1$-$C_4$-alkylphenyl, $C_1$-$C_4$-alkoxyphenyl or cyano, or a radical of the formula III

$[-(CH_2)_3-O]_p\ [-CH_2-CH_2-O]_n-R^6$ (III),

where

n is 1, 2, 3 or 4,

p is 0 or 1 and

$R^6$ is $C_1$-$C_4$-alkyl or phenyl, and

$R^4$ is methyl.

## Revendications

1. Procédé pour le transfert de colorants azoïques à partir d'un support sur un papier enduit de matière plastique par diffusion au moyen d'une tête thermique, caractérisé en ce qu'on utilise un support sur lequel se trouvent un ou plusieurs colorants azoïques de formule I

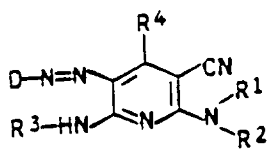

(I)

dans laquelle

$R^1$, $R^2$ et $R^3$ sont identiques ou différents et représentent chacun, indépendamment les uns des autres, un reste alkyle, alcoxyalkyle, alcanoyloxyalkyle, alcoxycarbonyloxyalkyle au alcoxycarbonylalkyle, ces restes renfermant chacun jusqu'à 20 atomes de carbone et pouvant être substitués par des groupements phényle, alkyl (en $C_1$-$C_4$)-phényle, alcoxy (en $C_1$-$C_4$)-phényle, halogénophényle, benzyloxy, alkyl (en $C_1$-$C_4$)-benzyloxy, alcoxy (en $C_1$-$C_4$)-benzyloxy, halogénobenzyloxy, halogéno, hydroxy ou cyano, un atome d'hydrogène, un reste phényle éventuellement substitué par un atome d'halogène ou par un groupement alkyle en $C_1$-$C_{15}$, alcoxy en $C_1$-$C_{15}$ ou benzyloxy, un reste cyclohexyle éventuellement substitué par un atome d'halogène ou un groupement alkyle en $C_1$-$C_{15}$, alcoxy en $C_1$-$C_{15}$ ou benzyloxy, ou un reste de formule II

$[-Y-O]_m-R^5$ (II)

où

Y est mis pour un reste alkylène en $C_2$-$C_6$,

m est mis pour 1, 2, 3, 4, 5 ou 6 et

$R^5$ est mis pour un reste alkyle en $C_1$-$C_4$ ou phényle éventuellement substitué par un groupement alkyle en $C_1$-$C_4$ au alcoxy en $C_1$-$C_4$,

$R^4$ représente un reste alkyle en $C_1$-$C_4$ et

D est le reste d'un composant de diazoïque qui dérive d'un composant de diazoïque $D-NH_2$ de formule

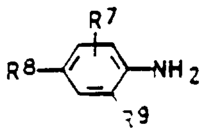 ,

(IVa)

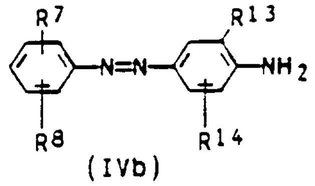 ,

(IVb)

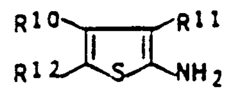

(IVc)

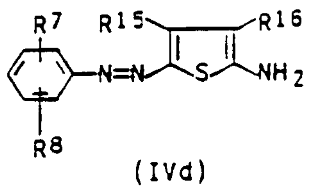 ,

(IVd)

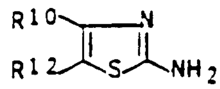 ,

(IVe)

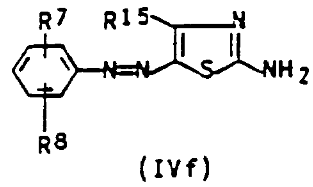 ,

(IVf)

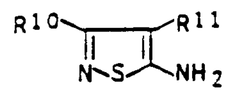

(IVg)

ou

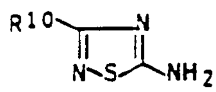

(IVh)

où

$R^7$, $R^8$ et $R^9$ sont identiques ou différents et représentent chacun, indépendamment les uns des autres, un reste alkyle, alcoxyalkyle, alcoxycarbonylalkyle ou alcanoyloxyalkyle, ces restes pouvant renfermer chacun jusqu'a 12 atomes de carbone, un atome d'hydrogène, d'halogène, un groupement cyano, nitro, un reste de formule II

$[-Y-O]_m-R^5$ (II)

dans laquelle Y, $R^5$ et m ont chacun la signification donnée précédemment, ou un reste de formule $-CO-OR^{17}$, $-CO-NR^{17}R^{18}$, $-SO_2-R^{17}$, $-SO_2-OR^{17}$ ou $-SO_2-NR^{17}R^{18}$, où $R^{17}$ et $R^{18}$ sont identiques ou différents et sont mis chacun, indépendamment l'un de l'autre, pour un reste alkyle, alcoxyalkyle, alcoxycarbonylalkyle ou alcanoyloxyalkyle, ces restes pouvant renfermer chacun jusqu'à 12 atomes de carbone, pour un atome d'hydrogène ou pour un reste de formule II

$[-Y-O]_m-R^5$ (II)

dans laquelle Y, $R^5$ et m ont chacun la signification donnée précédemment,

$R^{10}$ représente un atome d'hydrogène, de chlore, un groupement cyano, alkyle en $C_1$-$C_8$, alcoxy en $C_1$-$C_8$, alkyl (en $C_1$-$C_8$)-thio, alcoxyalkyle qui peut renfermer jusqu'à 8 atomes de carbone, phényle qui est éventuellement substitué par un reste alkyle en $C_1$-$C_4$, alcoxy en $C_1$-$C_4$ ou benzyloxy, un groupement benzyle, benzyloxy ou un reste de formule $-CO-OR^{17}$ ou $-CO-NR^{17}R^{18}$ où $R^{17}$ et $R^{18}$ ont chacun la signification donnée précédemment,

$R^{11}$ représente un atome d'hydrogène, un groupement cyano, nitro ou un reste de formule $-CO-OR^{17}$ ou $-CO-NR^{17}R^{18}$ où $R^{17}$ et $R^{18}$ ont chacun la signification

donnée précédemment,

$R^{12}$ représente un groupement cyano, nitro, formyle ou un reste de formule $-CO-OR^{17}$, $-CO-NR^{17}R^{18}$,

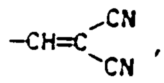 , 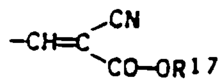

ou

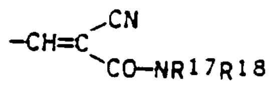 ,

où $R^{17}$ et $R^{18}$ ont chacun la signification donnée précédemment,

$R^{13}$ et $R^{14}$ sont identiques ou différents et représentent chacun, independamment l'un de l'autre, un atome d'hydrogène, un reste alkyle en $C_1$-$C_4$, alcoxy en $C_1$-$C_4$, un atome de chlore, un groupement cyano, nitro ou un reste de formule $-CO-OR^{17}$ ou $-CO-NR^{17}R^{18}$ où $R^{17}$ et $R^{18}$ ont chacun la signification donnée précédemment,

$R^{16}$ représente un atome d'hydrogène, de chlore ou un reste alkyle en $C_1$-$C_4$, et

$R^{16}$ représente un groupement cyano ou un reste de formule $-CO-OR^{17}$ ou $-CO-NR^{17}R^{18}$ où $R^{17}$ et $R^{18}$ ont chacun la signification donnée précédemment,

les composés suivants étant exclus

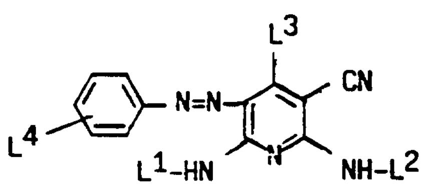

| $L^1$ | $L^2$ | $L^3$ | $L^4$ |
|---|---|---|---|
| $CH_3OC_2H_4$ | $CH_3OC_2H_4$ | $CH_3$ | 4-Cl |
| $CH_3OC_2H_4$ | $CH_3OC_2H_4$ | $CH_3$ | $4-CO_2C_2H_5$ |
| $CH_3OC_2H_4$ | $CH_3OC_2H_4$ | $CH_3$ | $3-CO_2C_2H_5$ |
| $n-C_4H_9$ | $n-C_4H_9$ | $CH_3$ | $2-CO_2C_2H_5$ |
| $CH_3OC_2H_4$ | $CH_3OC_2H_4$ | $CH_3$ | $2-CO_2C_2H_5$ |
| $CH_3OC_2H_4$ | $CH_3OC_2H_4$ | $CH_3$ | $2-CON(C_2H_5)_2$ |
| $CH_3OC_2H_4$ | $CH_3OC_2H_4$ | $CH_3$ | $2-CO_2C_2H_4CH(CH_3)_2$ |
| $n-C_4H_9$ | $n-C_4H_9$ | $CH_3$ | 2-CN |

**2.** Procédé selon la revendication 1, caractérisé en ce qu'il se trouve, sur le support, un ou plusieurs colorants azoïques de formule I dans laquelle

$R^1$, $R^2$ et $R^3$ représentent chacun, indépendamment les uns des autres, un atome d'hydrogène, un reste alkyle ou alcoxyalkyle, chacun de ces restes renfermant jusqu'à 15 atomes de carbone et pouvant être substitué par un groupement phényle, alkyl (en $C_1$-$C_4$)-phényle, alcoxy (en $C_1$-$C_4$)-phényle ou cyano, ou un reste de formule III

$[-(CH_2)_3-O]_p[-CH_2-CH_2-O]_n-R^6$ (III)

dans laquelle

n est mis pour 1, 2, 3 ou 4,
p est mis pour 0 ou 1 et
$R^6$ est mis pour un reste alkyle en $C_1$-$C_4$ ou phényle,

et

$R^4$ représente un reste méthyle.